# EUROPEAN PATENT SPECIFICATION

(11) **EP 3 493 603 B1**
(45) Date of publication and mention of the grant of the patent: **03.02.2021**
(21) Application number: 17836311.5
(22) Date of filing: 24.07.2017
(51) Int. Cl.: H04W 52/02

(54) **METHOD AND DEVICE FOR WAKING DEVICE**
VERFAHREN UND VORRICHTUNG FÜR AUFWECKVORRICHTUNG
PROCÉDÉ ET DISPOSITIF DE RÉVEIL D'UN DISPOSITIF

(30) Priority: 03.08.2016 CN 201610629834; 16.03.2017 CN 201710158033
(43) Date of publication of application: 05.06.2019
(73) Proprietor: Huawei Technologies Co., Ltd., Longgang District Shenzhen, Guangdong 518129 (CN)
(72) Inventor: DU, Zhenguo, Shenzhen Guangdong 518129 (CN)
(74) Representative: Thun, Clemens
(86) International application number: PCT/CN2017/094109
(87) International publication number: WO 2018/024129

(56) References cited:
- CN-A- 101 420 280
- CN-A- 103 517 419
- CN-A- 103 857 023
- CN-A- 104 350 799
- CN-A- 105 611 604
- US-A1- 2014 112 225
- US-A1- 2015 208 349
- US-A1- 2016 066 274

## Description

### TECHNICAL FIELD

This application relates to the field of communications technologies, and in particular, to a device wake-up method and a device.

### BACKGROUND

The IEEE 802.11 standard organization plans to formulate an Internet of Things (Internet of Things, IoT) standard based on a frequency band of 2.4 GHz/5 GHz, and the standard is basically characterized by lower power and a longer range. To reduce power consumption, a lower power (Lower Power, LP) wake-up receiver (Wake-up receiver, WUR) is used on a Wireless-Fidelity (Wireless-Fidelity, Wi-Fi) IoT device side. An 802.11 main radio (main radio) of a station (Station, STA) is usually in a standby state, and can communicate, only after being activated by a wake-up signal from the LP-WUR of the STA, with an access point (Access Point, AP).

After the main radio of the STA is woken up, a wake-up acknowledgment message needs to be sent to the AP, to notify the AP that the main radio is woken up. In specific implementation, an AP is usually associated with many STAs. For example, in some sensor networks, one AP may be associated with thousands or tens of thousands of STAs. When a plurality of STAs are woken up, the STAs respectively contend for channels based on the current Wi-Fi protocol to send wake-up acknowledgment messages to an AP. Consequently, a relatively long time is required to send the wake-up acknowledgment messages, and system transmission efficiency is reduced.

For example, US 2015/208349 A1 refers to a station, a method performed by a station and a corresponding method performed by an access point (AP) of a network to allow the station to operate a wireless local area network (WLAN) radio in a sleep state until the WLAN radio is ready to receive a beacon from the AP. The station includes a low power (LP) radio configured to receive a wake up signal from an AP of a network to which the station is connected. The station further includes a WLAN radio configured to operate in a sleep state until the WLAN radio receives an indication from the LP radio that the wakeup signal has been received, wherein WLAN radio is further configured to operate in a fully awake state after receipt of the indication to receive a beacon from the AP indicating a data transmission is pending for the station.

### SUMMARY

Embodiments of this application provide a device wake-up method, a wake-up device, and a to-be-woken-up device, to reduce energy consumption of the to-be-woken-up device and reduce a data transmission delay.

This problem is solved by the subject matter of the independent claims. Further implemenation forms are provided in the dependent claims.

### BRIEF DESCRIPTION OF DRAWINGS

FIG. 1 is a diagram of an application system of a device wake-up method according to an embodiment of this application;
FIG. 2 is a flowchart of a device wake-up method according to an embodiment of this application;
FIG. 3 is a schematic structural diagram of a wake-up notification according to an embodiment of this application;
FIG. 4 is a schematic diagram of a trigger message sending method according to an embodiment of this application;
FIG. 5 is a schematic diagram of another trigger message sending method according to an embodiment of this application;
FIG. 6 is a schematic diagram of another trigger message sending method according to an embodiment of this application;
FIG. 7 is a schematic diagram of another trigger message sending method according to an embodiment of this application;
FIG. 8 is a schematic diagram of another trigger message sending method according to an embodiment of this application;
FIG. 9 is a schematic diagram of a wake window according to an embodiment of this application;
FIG. 10 is a schematic diagram of dividing to-be-woken-up devices into groups according to an embodiment of this application;
FIG. 11 is a schematic diagram of a wake-up notification sending method according to an embodiment of this application;
FIG. 12 is a schematic diagram of a wake window extension method according to an embodiment of this application;
FIG. 13 is a schematic diagram of dividing wake windows into groups in time domain according to an embodiment of this application;
FIG. 14 is a schematic diagram of another trigger message sending method according to an embodiment of this application;
FIG. 15 is a schematic diagram of another trigger message sending method according to an embodiment of this application;
FIG. 16 is a schematic structural diagram of a wake-up device according to an embodiment of this application; and
FIG. 17 is a schematic structural diagram of a to-be-woken-up device according to an embodiment of this application.

### DESCRIPTION OF EMBODIMENTS

The following describes the technical solutions in embodiments of this application with reference to the accompanying drawings. Apparently, the described embodiments are merely some but not all of the embodiments of this application.

In the embodiments of this application, a wake-up device may be an access point or a station, and a to-be-woken-up device may be a station. In the embodiments of this application, a station may be a mobile phone (mobile phone), a tablet computer (Pad), a computer with a wireless receiving/transmission function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application.

It should be noted that, in the embodiments of this application, unless specially specified, the to-be-woken-up device is a device associated with the wake-up device, and the wake-up device may send related information to the device associated with the wake-up device or receive related information from the device associated with the wake-up device.

In the embodiments of this application, the wake-up device may include a first interface and a second interface, and the to-be-woken-up device may include a third interface and a fourth interface. The first interface communicates with the third interface in a first communication mode, that is, the first communication mode is used to identify a communication mode such as a WUR communication mode used by the first interface and the third interface, and WUR may also be referred to as a wake-up radio. The second interface communicates with the fourth interface in a second communication mode, that is, the second communication mode is used to identify a communication mode used by the second interface and the fourth interface, such as a conventional Wi-Fi communication mode. The first communication mode may be the same as or different from the second communication mode. It should be noted that, the first interface and the second interface, or the third interface and the fourth interface may be different physical entities, or may be logical units that are independent or integrated with each other. For the to-be-woken-up device, to reduce energy consumption, the fourth interface is usually in a standby state; and after receiving a wake-up notification sent by the wake-up device, the third interface sends a wake-up signal to the fourth interface, to wake up the fourth interface.

It should be noted that, in the embodiments of this application, unless specially specified, it may be considered that a message sent by the first interface of the wake-up device is received by the third interface of the to-be-woken-up device, a message sent by the second interface of the wake-up device is received by the fourth interface of the to-be-woken-up device, a message sent by the third interface of the to-be-woken-up device is received by the first interface of the wake-up device, and a message sent by the fourth interface of the to-be-woken-up device is received by the second interface of the wake-up device. That is, the first interface communicates with the third interface, and the second interface communicates with the fourth interface.

The first interface and the third interface may be wake-up radio interfaces, where the first interface may be configured to send a WUR frame, the third interface may be configured to receive the WUR frame, and the WUR frame may include a wake-up notification. The second interface and the fourth interface may be Wireless-Fidelity Wi-Fi interfaces, and may be configured to receive/transmit a Wi-Fi message. Decoding complexity of the WUR frame is greatly lower than decoding complexity of a physical frame of the Wi-Fi message, so that receiving power consumption of the third interface is greatly lower than receiving power consumption of the fourth interface. Therefore, introduction of a wake-up radio interface may enable the to-be-woken-up device to save more power. Moreover, the second interface and the fourth interface may further be communications interfaces such as LTE (Long Term Evolution, long term evolution) interfaces, and are configured to perform high-speed data communication.

The wake-up device may send a wake-up notification to one or more to-be-woken-up devices through the first interface, and the to-be-woken-up device receives the wake-up notification through the third interface. A modulation and coding scheme in which the wake-up notification is parsed easily by the to-be-woken-up device is used for the wake-up notification, to prevent the to-be-woken-up device from consuming a large quantity of energy during decoding. The wake-up notification carries a trigger indication (Trigger Indication), and the trigger indication is used to indicate whether the wake-up device subsequently sends a trigger message.

If the trigger indication indicates that the wake-up device is to send a trigger message, after being woken, the fourth interface of the to-be-woken-up device does not immediately contend for a channel to send a wake-up acknowledgment message, but waits for the trigger message sent by the wake-up device through the second interface. In an example, after receiving the trigger message, fourth interfaces of the plurality of to-be-woken-up devices may immediately simultaneously send the wake-up acknowledgment message in a multi-user communication mode, so that the plurality of to-be-woken-up devices may simultaneously send the wake-up acknowledgment message, thereby improving transmission efficiency of the wake-up acknowledgment message, and then improving resource use efficiency. In an example, after receiving the trigger message, the fourth interface of the to-be-woken-up device may begin to contend for a channel to send the wake-up acknowledgment message without waiting for a probe delay (probe delay) time length, thereby reducing a data transmission delay. It should be noted that, in the current 802.11 standard, after being woken, a standby device can begin to contend for a channel only after the standby device obtains, through listening, an effective legacy Wi-Fi frame that can be used to set a network allocation vector (Network Allocation Vector, NAV); otherwise, can begin to contend for a channel only after the standby device waits for a probe delay time length. The probe delay time length is related to internal implementation of the device, and is usually 5 ms to 10 ms. This delays a time at which the to-be-woken-up device sends the wake-up acknowledgment message, and then delays a data sending time. In the embodiments of this application, the trigger message may be of a format of the legacy Wi-Fi frame, and the to-be-woken-up device may set an NAV based on the trigger message, so that the to-be-woken-up device may send the wake-up acknowledgment message without waiting for the probe delay time length.

If the trigger indication indicates that the wake-up device is to send the trigger message, but the woken-up fourth interface has not received, within a preset time, the trigger message sent by the wake-up device, the fourth interface sends the wake-up acknowledgment message in a manner of contending for a channel.

If the trigger indication indicates that the wake-up device is not to send the trigger message, after being woken, the fourth interface sends the wake-up acknowledgment message in a manner of contending for a channel.

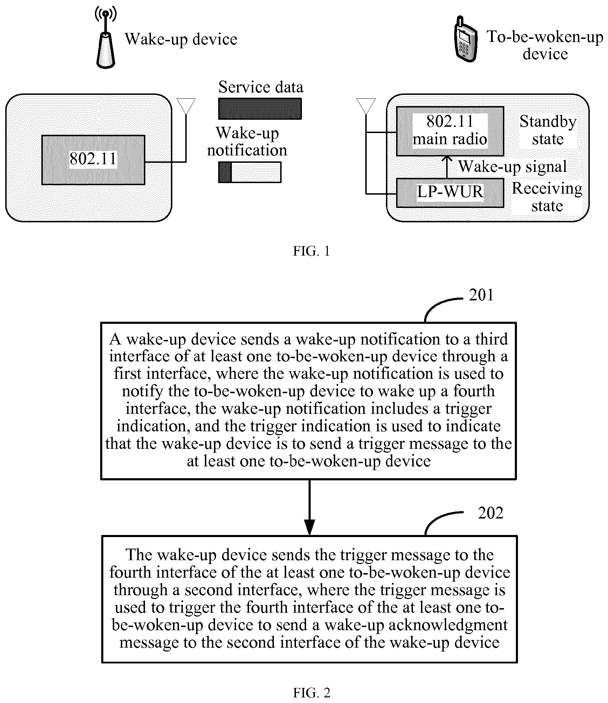

FIG. 1 shows a wake-up device and a to-be-woken-up device in an example of this application. In this example, a first interface and a second interface of the wake-up device reuse a same antenna. An 802.11 main radio of the wake-up device may be used as the first interface to send a lower power WUR frame, and may be used as the second interface to send or receive a Wi-Fi frame. It should be noted that, lower power is based on less energy that needs to be consumed when a receive end decodes a frame, a WUR frame is usually modulated in a modulation manner in which the receive end easily decodes the WUR frame, and energy consumed when the receive end decodes the WUR frame is lower than energy consumed when the receive end decodes a Wi-Fi frame. Therefore, the WUR frame may be used as a lower power WUR frame. Specifically, after being slightly modified, the 802.11 main radio of the wake-up device may be configured to send the lower power WUR frame. For example, if a WUR signal is a single carrier signal, when performing orthogonal frequency division multiplexing (Orthogonal Frequency Division Multiplex, OFDM) subcarrier mapping, the wake-up device may set other subcarriers to zero, and transmit information on only a subcarrier corresponding to a WUR, thereby generating a WUR frame. It should be noted that, receiving and decoding of the WUR frame are simpler than receiving and decoding of a legacy Wi-Fi frame, and less energy of a receiving device is consumed. A third interface and a fourth interface of the to-be-woken-up device reuse a same antenna. Processing modules of the to-be-woken-up device include an 802.11 main radio and an LP-WUR module. As the fourth interface, the 802.11 main radio of the to-be-woken-up device communicates with the second interface of the wake-up device. As the third interface, the LP-WUR module of the to-be-woken-up device communicates with the first interface of the wake-up device, that is, receives a wake-up notification from the first interface. After receiving the wake-up notification, the LP-WUR module may send a wake-up signal to the 802.11 main radio, to wake up the 802.11 main radio in a standby state. Certainly, the first interface of the wake-up device may alternatively be implemented by using an independent LP-WUR module instead of reusing an 802.11 module. Alternatively, the first interface and the second interface may respectively use independent antennas. Alternatively, the third interface and the fourth interface may respectively use independent antennas. However, from the perspective of reducing device costs and complexity, module reusing and antenna reusing can bring a beneficial effect.

It should be noted that, in the embodiments of this application, the WUR frame may also be defined within an 802.11 standard framework, and to distinguish descriptions, "legacy (Legacy) " may be added in front of a related concept such as another frame defined in the conventional 802.11 standard. A device wake-up method provided in an embodiment of this application is described with reference to FIG. 2. The method may be applied to a wake-up device and at least one to-be-woken-up device, the wake-up device includes a first interface and a second interface, the to-be-woken-up device includes a third interface and a fourth interface, the first interface communicates with the third interface in a first communication mode, and the second interface communicates with the fourth interface in a second communication mode. The method is performed by the wake-up device, and includes the following steps.

Step 201. The wake-up device sends a wake-up notification to the third interface of the at least one to-be-woken-up device through the first interface, where the wake-up notification is used to notify the at least one to-be-woken-up device to wake up the fourth interface, the wake-up notification includes a trigger indication, and the trigger indication is used to indicate that the wake-up device is to send a trigger message to the at least one to-be-woken-up device.

A legacy 802.11 frame uses an encoding manner such as OFDM, binary convolutional code (Binary Convolutional Code, BCC), or low-density parity check (Low-density Parity Check, LDPC) at a transmit end. Therefore, correspondingly, a receive end needs to perform complex operations such as Fast Fourier Transform (Fast Fourier Transform, FFT) and forward error correction (Forward Error Correction, FEC) decoding to process the foregoing signal, and these operations need to consume a large quantity of energy of the receive end.

In this embodiment of this application, the wake-up notification may be modulated in a modulation manner in which the to-be-woken-up device easily demodulates the wake-up notification. In an example, on-off keying (On-Off Key, OOK) modulation may be used, and the to-be-woken-up device determines, depending on whether there is energy, information carried in the wake-up notification. For example, if there is energy, the information is 1, or if there is no energy, the information is 0. The wake-up notification may be encoded by using some simple channel coding such as repetition coding and Manchester coding, and the receive end may implement decoding by consuming less energy.

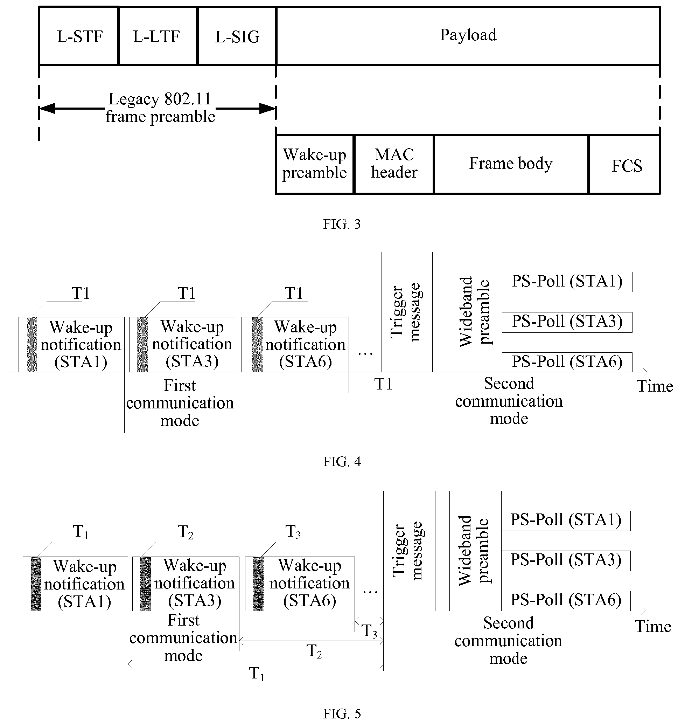

FIG. 3 shows a possible structure of a frame of a wake-up notification. The structure of the frame of the wake-up notification may include a legacy 802.11 frame preamble (Legacy-preamble), for example, a legacy short training field (Legacy-Short Training Field, L-STF), a legacy long training field (Legacy-Long Training Field, L-LTF), and a legacy signal field (Legacy-Signal, L-SIG). The legacy 802.11 frame preamble may be sent in an OFDM manner on bandwidths of 20 MHz and integer times 20 MHz. The legacy 802.11 frame preamble may be used for being backward compatible, so that a legacy Wi-Fi device may determine, based on the preamble, that the wake-up notification is a Wi-Fi frame, and then may select a corresponding channel to listen to a decision threshold. Payload (Payload) of the wake-up notification may be modulated in an OOK modulation manner. In an example, the OOK modulation manner may be amplitude shift keying (Amplitude Shift Keying, ASK). The payload may be transmitted on a channel with a bandwidth such as 2 MHz, 4 MHz, or 5 MHz, a legacy Wi-Fi channel has a minimum bandwidth of 20 MHz, the payload part may be transmitted on a relatively narrow bandwidth, so that energy consumption of a receive end is less. The payload may include a wake-up preamble and a Media Access Control (Medium Access Control, MAC) part. An STF and an LTF in the wake-up preamble are similar to those in a legacy Wi-Fi frame, and are used for time frequency synchronization, automatic gain control (Automatic Gain Control, AGC), channel estimation, and the like. The MAC part of the payload is similar to a MAC part of the legacy Wi-Fi frame, and includes a MAC header (MAC Header), a frame body (Frame Body), and a frame check sequence (Frame Check Sequence, FCS), where the MAC part of the payload may alternatively not include a frame body. Channel coding may be performed on the MAC part of the payload in an encoding manner such as by using a repetition code, a spreading code, or a Manchester code, to improve transmission reliability of the MAC part. The wake-up preamble may include a string of particular sequences, and a third interface of a to-be-woken-up device may not receive the legacy 802.11 frame preamble in the wake-up notification, but directly detects the particular sequences in the wake-up preamble, thereby identifying beginning of the wake-up notification. When the to-be-woken-up device detects a to-be-woken-up-device identifier in the MAC part of the wake-up notification, the third interface of the to-be-woken-up device may send a wake-up signal to a fourth interface of the to-be-woken-up device, to wake up the fourth interface. The to-be-woken-up-device identifier may be a unicast address, or may be a multicast or broadcast address. To improve transmission efficiency and reduce power consumption, a conventional 802.11 preamble may be not added to the wake-up notification; and channel coding may be not performed on the MAC part of the payload.

In an example, the payload of the wake-up notification may be modulated in a frequency shift keying (Frequency Shift Keying, FSK) modulation manner.

In an example, a trigger indication may be a bit. For example, "1" indicates that a wake-up device is to send a trigger message, and "0" indicates that the wake-up device does not send the trigger message.

In an example, the trigger message may include a target sending time, and the target sending time may be used to indicate a time at which the wake-up device sends the trigger message. Several milliseconds may be required from when the third interface of the to-be-woken-up device receives the wake-up notification until the fourth interface enters an operating state, a period of time is also required from when the fourth interface enters the operating state until the trigger message is received, and if the fourth interface is always in a receiving state or a channel listening state within this period of time, more power is consumed. A trigger indication may include the target sending time indicating that a second interface of the wake-up device sends the trigger message, so that after entering the operating state and before a time indicated by the target sending time, the fourth interface of the to-be-woken-up device does not need to listen on a channel, thereby further saving power. The wake-up device may send the trigger message in a manner of contending for a channel, and an exact time at which the trigger message is sent cannot be determined. Therefore, the target sending time may indicate that the wake-up device does not send the trigger message before the time point indicated by the target sending time, where a specific sending moment of the trigger message may be determined based on a result of contending for a channel by the wake-up device.

In an example, a possible situation is that, the wake-up device sends wake-up notifications to at least two to-be-woken-up devices at different times, for example, may asynchronously send wake-up notifications one by one; and the other possible situation is that, periods of time required from when different wake-up devices receive wake-up notifications from third interfaces until fourth interfaces enter in a receiving state or a channel listening state are different. In both of these two situations, from entering the operating state to receiving the trigger message, fourth interfaces of different to-be-woken-up devices may need to wait for different periods of time. Within the periods of time, the to-be-woken-up devices need to continuously listen on a channel to receive possibly coming trigger messages, causing unnecessary power consumption. In this example, a to-be-woken-up device may report, to the wake-up device, a period of time required from when the to-be-woken-up device receives a wake-up notification from a third interface until a fourth interface enters a receiving state, that is, a wake-up preparation time, and the wake-up preparation time may be a required longest time. The wake-up device may determine a target sending time in a trigger indication based on the wake-up preparation time of the to-be-woken-up device before the fourth interface enters the receiving state at latest, so that fourth interfaces of a plurality of to-be-woken-up devices may enter the operating state at an approximately same time to receive the trigger message, and before a time indicated by the target sending time, even if the fourth interfaces of the plurality of to-be-woken-up devices enter the operating state, the fourth interfaces do not need to listen on a channel, thereby further reducing power consumption of the to-be-woken-up devices. The to-be-woken-up device may report the wake-up preparation time of the to-be-woken-up device to the wake-up device in advance through the fourth interface, that is, transmit the wake-up preparation time of the third interface of the to-be-woken-up device to the second interface of the wake-up device through the fourth interface.

In an example, for a trigger indication, a value may be used to indicate that a trigger message is not sent, and another value is used to identify a target sending time. For example, the trigger indication may have eight bits, where 0 is used to indicate that a trigger message is not sent, and other values are used to indicate different target sending times.

In an example, a trigger indication may be one or more bits in a wake-up notification. In an example, a first value and a second value may be specified, and the first value and the second value are different. When the first value such as "1" is taken as the trigger indication, it may indicate that a trigger message is sent, so that after being woken, the fourth interface of the to-be-woken-up device does not need to contend for a channel to send a wake-up acknowledgment message, but only needs to wait for a trigger message from the wake-up device; and when the second value such as "2" is taken as the trigger indication, it may indicate that a trigger message is not sent, so that after being woken, the fourth interface of the to-be-woken-up device sends a wake-up acknowledgment message by contending for a channel. In an example, a first set and a second set may be specified, and an intersection set of the first set and the second set is a null set. When a value of the trigger indication is any element in the first set, it may indicate that a trigger message is sent; and when a value of the trigger indication is any element in the second set, it may indicate that a trigger message is not sent. Specifically, for example, the first set may be {0, 1, 2}, and the second set may be {3, 4, 5, 6, 7}.

In an example, it may be specified that after sending a trigger indication, the wake-up device needs to send a trigger message. In this case, all values of the trigger indication may be used to indicate target sending times of the trigger message.

In an example, a trigger indication may include a destination address field and a target sending time field. The destination address field and the target sending time field may respectively occupy independent fields. The destination address field may be used to indicate that a trigger message is to be sent, and the target sending time field may be used to indicate a time at which the trigger message is sent. The destination address field may be used to indicate that a trigger message is not sent, and the target sending time field may reserve or be used to indicate other information.

In an example, a trigger indication may include a destination address field of a wake-up notification subsequently sent by the wake-up device. When the destination address field includes at least one of a unicast address, a broadcast address, and a multicast address, it may indicate that the wake-up device subsequently sends a trigger message through the second interface. Therefore, after being woken, the fourth interface of the to-be-woken-up device may not immediately send a wake-up acknowledgment message, but wait for the trigger message. When the destination address field includes only a unicast address, it may indicate that the wake-up device does not send a trigger message. Therefore, after being woken, the fourth interface of the to-be-woken-up device may send a wake-up acknowledgment message in a manner of contending for a channel.

In an example, a target sending time may be an absolute time. As shown in FIG. 4, a wake-up device may asynchronously sequentially send wake-up notifications to to-be-woken-up devices STA1, STA3, and STA6, trigger indications in all of the wake-up notifications include a target sending time T1, and the target sending time indicates that the wake-up device expects to send a trigger message at a moment T1 or that the wake-up device sends a trigger message at a moment T1 at earliest. For example, the absolute time of the target sending time indicates several low bytes of a timing synchronization function (Timing Synchronization Function, TSF) corresponding to the moment at which the trigger message is expected to be sent, where a TSF is a timing synchronization function of a system clock. Usually, the TSF is indicated in a form of hours, minutes, and seconds. In this embodiment of this application, to reduce overheads, T1 may be indicated by using only several low bytes of the TSF corresponding to T1, for example, indicated by using only seconds. For example, if the TSF is 10:40:25, T1 may be 25.

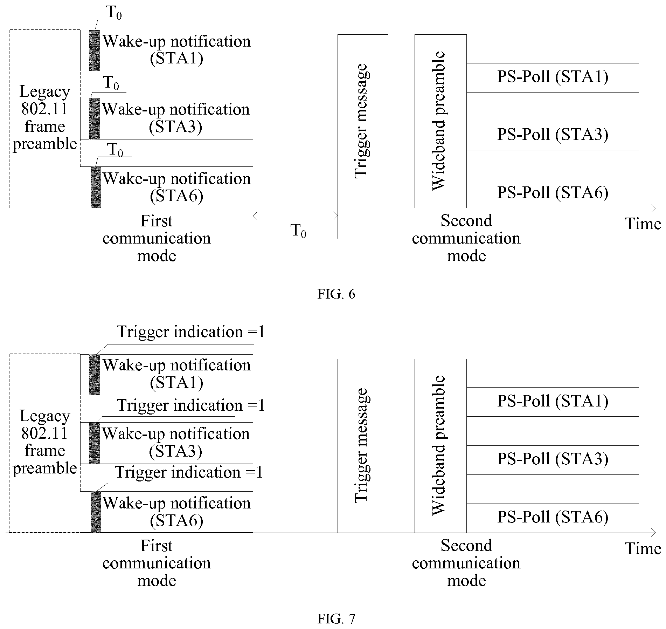

In an example, a target sending time may be a relative time. In an example, as shown in FIG. 5, a wake-up device may asynchronously send three wake-up notifications to to-be-woken-up devices TA1, STA3, and STA6, and target sending times included in trigger indications in the three wake-up notifications are respectively T1, T2, and T3, to indicate relative times between sending moments of the wake-up notifications and a sending moment of a trigger message. In an example, as shown in FIG. 6, a wake-up device may send wake-up notifications to to-be-woken-up devices STA1, STA3, and STA6 in a multi-user communication mode, trigger indications in the wake-up notifications include a target sending time T0, and the target sending time indicates a time length T0 after which the wake-up device sends a trigger message and that starts from a moment at which the wake-up device sends the wake-up notifications. In other words, a relative time of the target sending time indicates a time interval between a moment at which the current wake-up notifications end and a moment at which the trigger message is expected to be sent.

Step 202. The wake-up device sends the trigger message to the fourth interface of the at least one to-be-woken-up device through the second interface, where the trigger message is used to trigger the fourth interface of the at least one to-be-woken-up device to send a wake-up acknowledgment message to the second interface of the wake-up device.

In an example, the trigger message may be a trigger (Trigger) frame defined in 802.11ax, and may be used to trigger one or more to-be-woken-up devices to transmit related information in a multi-user communication mode or another manner of not contending for a channel, where the related information includes the wake-up acknowledgment message. After receiving the trigger message, the fourth interface of the to-be-woken-up device may send the wake-up acknowledgment message to the wake-up device.

The wake-up acknowledgment message may be a frame whose length is relatively short, for example, a power saving-poll (Power Saving-Poll, PS-Poll) frame, a null data packet (Null Data Packet, NDP), a null data (Null Data) frame, or an acknowledgment (Acknowledge, ACK) frame, to reduce transmission overheads of the wake-up acknowledgment message.

In an example, a wake-up acknowledgment message is described by using a PS-Poll frame as an example. As shown in FIG. 7, a wake-up device may send wake-up notifications to three to-be-woken-up devices STA1, STA3, and STA6, and each of trigger indications in the wake-up notifications is "1". The wake-up device sends trigger messages to the STA1, the STA3, and the STA6. The STA1, the STA3, and the STA6 send wake-up acknowledgment messages to the wake-up device. The wake-up acknowledgment message of the STA1, the STA3, and the STA6 may include a wideband preamble (wideband preamble), and the wideband preamble may be 20 MHz or integer times 20 MHz, and may be used for being backward compatible, so that a legacy Wi-Fi device may determine, based on the preamble, that the wake-up notification is a Wi-Fi frame, and then may select a corresponding channel to listen to a decision threshold. The wideband preamble is similar to a preamble of a physical layer protocol data unit (Physical layer Protocol Data Unit, PPDU) in 802.11ax.

In an example, the foregoing device wake-up method further includes receiving, by the wake-up device, the wake-up acknowledgment message from the fourth interface of the at least one to-be-woken-up device through the second interface.

In an example, when there are two or more than two to-be-woken-up devices, the wake-up device receives, from the two or more than two to-be-woken-up devices through the second interface, wake-up acknowledgment messages sent in a multi-user communication mode. A multi-user communication mode may be an orthogonal frequency division multiple access (Orthogonal Frequency Division Multiple Access, OFDMA) manner. A multi-user communication mode may further be a multi-user multiple-input multiple-output (Multiple User-Multiple Input and Multiple Output, MU-MIMO) or Code Division Multiple Access (Code Division Multiple Access, CDMA) manner. In this application, a solution of this application is described by using an example in which a multi-user communication mode is OFDMA.

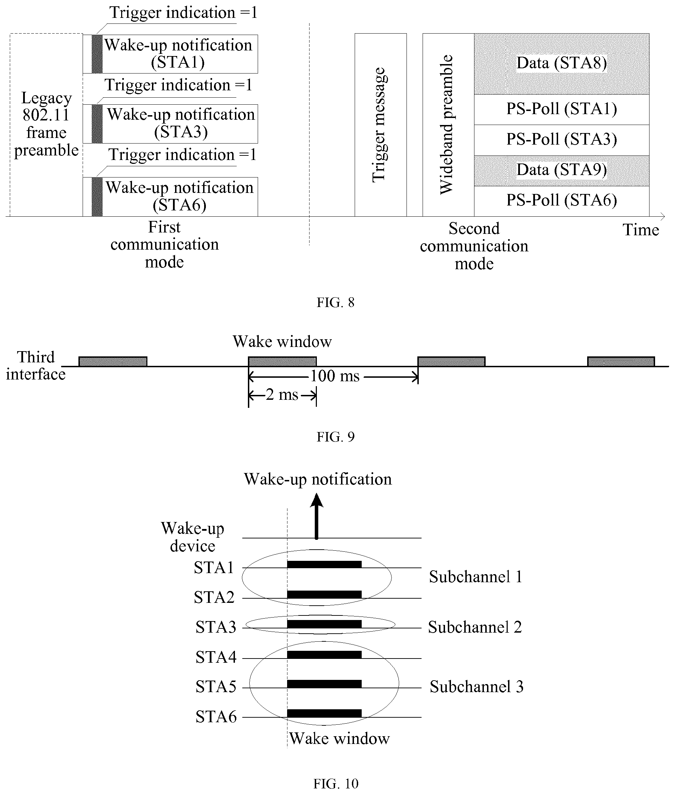

In an example, a trigger message may indicate a subchannel (subchannel), and each to-be-woken-up device may send, by using the trigger message, a wake-up acknowledgment message for the subchannel indicated by the trigger message. In this example, the trigger message may reuse a trigger frame in 802.11ax. Moreover, the wake-up device may simultaneously schedule the wake-up acknowledgment message of the to-be-woken-up device and data of another device. For example, as shown in FIG. 8, a wake-up device may send a trigger message to devices STA1, STA3, STA6, STA8, and STA9. The STA1, the STA3, and the STA6 are to-be-woken-up devices, and may send, after receiving the trigger message, a wake-up acknowledgment message through a subchannel indicated by the trigger message. The STA8 and the STA9 may send data through the subchannel indicated by the trigger message. Simultaneous scheduling of the wake-up acknowledgment message of the to-be-woken-up devices and data of another device may further improve resource use efficiency.

In an example, after the wake-up device sends a wake-up notification to a to-be-woken-up device in a multi-user communication mode, the to-be-woken-up device sends a wake-up acknowledgment message through a subchannel on which the to-be-woken-up device receives the wake-up notification, that is, the wake-up device always sends the wake-up acknowledgment message through a subchannel the same as that on which the wake-up notification is received. In this example, a trigger message does not need to indicate the subchannel on which the to-be-woken-up device sends the wake-up acknowledgment message, thereby reducing indication overheads.

In an example, after the wake-up device sends a wake-up notification to a to-be-woken-up device in a multi-user communication mode, a subchannel on which the to-be-woken-up device sends a wake-up acknowledgment message and a subchannel on which the to-be-woken-up device receives the wake-up notification have a mapping relationship. In an example, a width of the subchannel on which the to-be-woken-up device receives the wake-up notification and a width of the subchannel on which the to-be-woken-up device sends the wake-up acknowledgment message are the same, but locations of the subchannels are different. For example, there are in total nine subchannels on which the to-be-woken-up device receives the wake-up notification, and serial numbers of the subchannels are n (n=0 to 8). When the to-be-woken-up device receives the wake-up notification on a subchannel n, the to-be-woken-up device sends the wake-up acknowledgment message on a subchannel n+2 (n=0 to 8). In an example, the width of the subchannel on which the to-be-woken-up device receives the wake-up notification and the width of the subchannel on which the to-be-woken-up device sends the wake-up acknowledgment message are different. To ensure that the wake-up notification has a relatively high transmission rate so that a time domain length of the wake-up notification is shorter, a bandwidth of the subchannel occupied by the wake-up notification may be relatively wide, for example, 4 MHz; and the subchannel occupied by the wake-up acknowledgment message may be relatively narrow, for example, 2 MHz. A mapping relationship may be established for the foregoing two subchannels with different bandwidths. For example, a bandwidth of 20 MHz may include subchannels occupied by five wake-up notifications or subchannels occupied by 10 wake-up acknowledgment messages, where a subchannel occupied by each wake-up notification corresponds to a subchannel occupied by a wake-up acknowledgment message.

In an example, a trigger message may indicate a plurality of subchannels, and a to-be-woken-up device may randomly select one of the subchannels to send a wake-up acknowledgment message. The trigger message may be a random access trigger frame, and a method for a random access process in 802.11ax may be used as a specific method for randomly selecting a subchannel by the to-be-woken-up device. In this way, the wake-up device may not explicitly indicate a channel for each to-be-woken-up device, thereby reducing indication overheads.

The wake-up device may simultaneously or asynchronously send a wake-up notification to at least one to-be-woken-up device. A communication mode of sending the wake-up notification may be a manner of contending for a channel, may be a multi-user communication mode such as OFDMA, may be a multicast mode, or may be a broadcast mode. The wake-up device may separately send a wake-up notification of a unicast form to each to-be-woken-up device; or may send a wake-up notification of a multicast form to some to-be-woken-up devices, and send a wake-up notification of a unicast form to some other to-be-woken-up devices.

It should be noted that, if the wake-up device wakes two or more to-be-woken-up devices, the method recorded in the embodiments of this application may be used; and if the wake-up device wakes up only one to-be-woken-up device, the method recorded in the embodiments of this application may be used or not used. If a third interface of a to-be-woken-up device is in a receiving state or a channel listening state for a long time, a large quantity of energy is also consumed. To reduce power consumption of the third interface, a wake window (wake window) may be introduced into this embodiment of this application. Within the wake window, the third interface is in the receiving state or the channel listening state, and beyond the wake window, the third interface is in a standby state. The wake window may occur regularly, so that the wake-up device can learn when the third interface of the to-be-woken-up device is within the wake window, thereby sending a wake-up notification. FIG. 9 shows a possible design of a wake window. In time domain, a wake window may occupy 2 ms of each 100 ms. When a wake-up device needs to send data to the to-be-woken-up device, the wake-up device may send a wake-up notification within the wake window to wake up a fourth interface of the to-be-woken-up device. Alternatively, a wake window may be not introduced into this embodiment of this application, that is, a third interface of the to-be-woken-up device is always in the receiving state or the channel listening state, so that the wake-up device may wake up the to-be-woken-up device at any time, thereby reducing a wake-up delay.

In this embodiment of this application, the wake-up device may simultaneously wake up at least two to-be-woken-up devices, and wake windows for the at least two to-be-woken-up devices may partially or completely overlap in time domain, so that the wake-up device may simultaneously send wake-up notifications to the at least two to-be-woken-up devices.

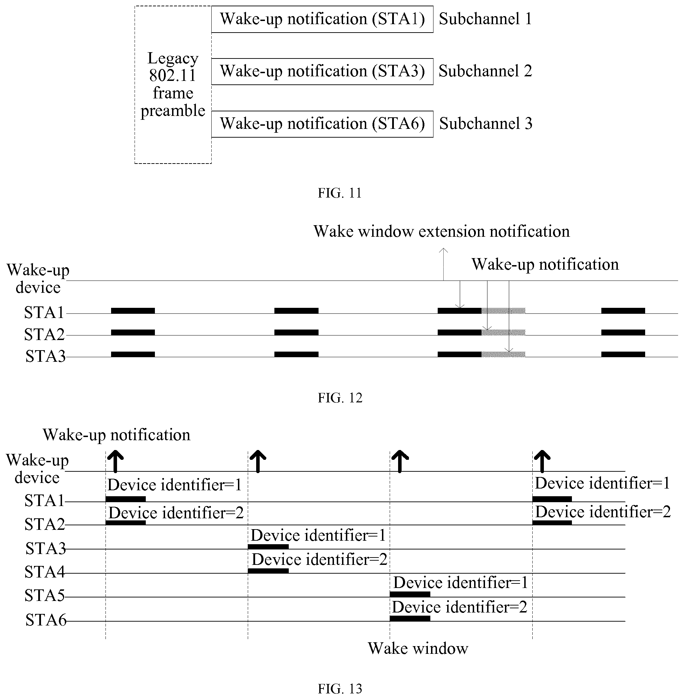

In an example, before sending a wake-up notification, the second interface of the wake-up device may send channel assignment information to each of at least one to-be-woken-up device, where the channel assignment information is used to indicate a subchannel on which the wake-up device sends the wake-up notification to the to-be-woken-up device. In other words, the channel assignment information indicates a subchannel on which the third interface of the to-be-woken-up device should receive the wake-up notification. The wake-up device may send the wake-up notification in a multi-user communication mode, and the third interface of the to-be-woken-up device may receive the wake-up notification on the subchannel that the channel assignment information is used to assign to the third interface. In an example, the at least one to-be-woken-up device may include at least two to-be-woken-up device groups, and a to-be-woken-up device group includes at least a to-be-woken-up device. The wake-up device may simultaneously send the channel assignment information to the to-be-woken-up device groups and a remaining single to-be-woken-up device, to assign a subchannel to each to-be-woken-up device group and the remaining single to-be-woken-up device. The method recorded in this example is described by using a specific example with reference to FIG. 10 and FIG. 11. As shown in FIG. 10, a wake-up device may simultaneously send channel assignment information to to-be-woken-up devices STA1, STA2, STA3, STA4, STA5, and STA6, where the STA1 and the STA2 may be a to-be-woken-up device group, and the STA4, the STA5, and the STA6 are a to-be-woken-up device group. The channel assignment information may be used to assign a subchannel 1 to the STA1 and the STA2, assign a subchannel 2 to the STA3, and assign a subchannel 3 to the STA4, the STA5, and the STA6. As shown in FIG. 11, a wake-up device may send a wake-up notification to a STA1 through a subchannel 1, send a wake-up notification to a STA3 through a subchannel 2, send a wake-up notification to a STA6 through a subchannel 3, and the STA1, the STA3, and the STA6 respectively receive wake-up notifications on respective subchannels.

In an example, the wake-up device may send a broadcast wake-up notification, to wake up all to-be-woken-up devices in broadcast mode; and if a wake window is introduced, a to-be-woken-up device located within a wake window period is woken up.

In an example, before sending the wake-up notification, the wake-up device may establish one or more multicast groups, and each multicast group includes at least one to-be-woken-up device. In an example, the wake-up device may send configuration information to to-be-woken-up devices in advance through the second interface, where the configuration information may be used to configure the wake-up device as one or more multicast groups. It should be noted that, the wake-up device may send configuration information to all of the to-be-woken-up devices, to configure all of the to-be-woken-up devices as one or more multicast groups; and the wake-up device may send configuration information to some to-be-woken-up devices, to configure the some to-be-woken-up devices as one or more multicast groups. The wake-up device may send a multicast wake-up notification, to wake up a to-be-woken-up device in a multicast group. The wake-up device may simultaneously send one or more multicast wake-up notifications in a multi-user communication mode, and a multicast wake-up notification is used to wake up a to-be-woken-up device in a multicast group. Alternatively, the wake-up device may simultaneously send one or more multicast wake-up notifications and one or more unicast wake-up notifications in a multi-user communication mode, to wake up a to-be-woken-up device in a multicast group and a to-be-woken-up device out of the multicast group. Before the wake-up device sends a multicast wake-up notification and/or a unicast wake-up notification in a multi-user communication mode, the wake-up device may send channel assignment information to a multicast group and/or a to-be-woken-up device out of the multicast group, to assign a subchannel on which the multicast group and/or the to-be-woken-up device out of the multicast group receives the wake-up notification.

In an example, a broadcast wake-up notification may include device identifier information of one or more to-be-woken-up devices, and the device identifier information includes a device identifier; and the broadcast wake-up notification may wake up a corresponding to-be-woken-up device based on the device identifier information, but not wake up all to-be-woken-up devices.

In an example, a multicast wake-up notification may include device identifier information of one or more to-be-woken-up devices, and the device identifier information includes a device identifier; and the multicast wake-up notification may wake up a corresponding to-be-woken-up device in a multicast group based on the device identifier information, but not wake up all to-be-woken-up devices in the multicast group.

In an example, an arrangement order may be set for to-be-woken-up devices or to-be-woken-up devices in a same multicast group. Device identifier information may include a bitmap (bitmap), where each bit of the bitmap corresponds to a to-be-woken-up device. A first bit in the bitmap corresponds to a first to-be-woken-up device in specified arrangement, and a bit after the first bit corresponds to a to-be-woken-up device after the first to-be-woken-up device in the specified arrangement. Each bit may be 0 or 1. In an example, if a bit is 0, it may indicate that a to-be-woken-up device corresponding to the bit is not woken; and if a bit is 1, it may indicate that a to-be-woken-up device corresponding to the bit is woken up. Certainly, setting may alternatively be that, when a bit is 1, it indicates that a to-be-woken-up device corresponding to the bit is not woken; and when a bit is 0, it indicates that a to-be-woken-up device corresponding to the bit is woken up.

In an example, an arrangement order may be set for to-be-woken-up devices or to-be-woken-up devices in a same multicast group. Device identifier information may include a bitmap and a start identifier (start ID), bits in the bitmap respectively correspond to different to-be-woken-up devices, and the start identifier may indicate any to-be-woken-up device in arrangement. A first bit in the bitmap corresponds to a to-be-woken-up device indicated by the start identifier, and a value of each bit in the bitmap indicates whether a to-be-woken-up device corresponding to the bit is a target wake-up device. For example, in a wake-up notification, a start identifier is 7 and a bitmap is [10011011], to indicate that target wake-up devices of the wake-up notification are to-be-woken-up devices 7, 10, 11, 13, and 14. In an example, for a to-be-woken-up device into which a wake window is introduced, the wake-up device may send a wake window extension notification, to delay a third interface of the to-be-woken-up device from being standby. As shown in FIG. 12, after receiving a wake window extension notification, to-be-woken-up devices STA1, STA2, and STA3 may prolong time of wake windows of third interfaces of the to-be-woken-up devices, so that a wake-up device may have time to send wake-up notifications to the STA1, the STA2, and the STA3 one by one. In an example, the wake window extension notification may further include a time length by which the wake window needs to be prolonged.

In an example, the wake-up device may divide to-be-woken-up devices into groups in time domain based on wake windows of the to-be-woken-up devices. In time domain, wake windows of to-be-woken-up devices in a same group may overlap, and wake windows of to-be-woken-up devices in different groups may not overlap. In an example, as shown in FIG. 13, a wake-up device divides to-be-woken-up devices STA1, STA2, STA3, STA4, STA5, and STA6 into groups based on wake windows. Wake windows of to-be-woken-up devices in a same group are aligned in time domain. The wake-up device may wake up the to-be-woken-up devices in the same group in broadcast mode; or may wake up the to-be-woken-up devices in the same group one by one in unicast mode. Device identifiers of to-be-woken-up devices in different groups may be reused, thereby shortening a length of a device identifier in a wake-up notification, and then reducing a length of the wake-up notification.

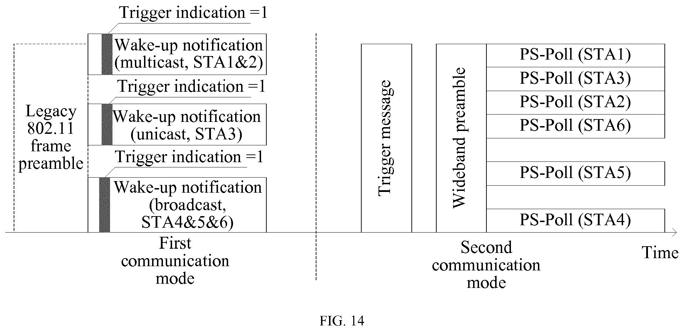

In an example, the wake-up device may send wake-up notifications to a plurality of groups of to-be-woken-up devices in parallel on a plurality of subchannels in a multi-user communication mode, and there may be one or more to-be-woken-up devices in each group; and the wake-up notification may be a unicast wake-up notification, a multicast wake-up notification, or a broadcast wake-up notification. In an example, as shown in FIG. 14, to-be-woken-up devices STA1 and STA2 are a multicast group, a to-be-woken-up device STA3 is a group, and to-be-woken-up devices STA4, STA5, and STA6 are a broadcast group. A wake-up device may simultaneously send a multicast wake-up notification, a unicast wake-up notification, and a broadcast wake-up notification in an OFDMA manner, to separately wake up the STA1, the STA2, the STA3, the STA4, the STA5, and the STA6. In this example, the wake-up device may simultaneously send wake-up notifications of multicast, broadcast, and unicast forms, and may simultaneously wake up a plurality of to-be-woken-up devices, thereby further improving wake-up efficiency.

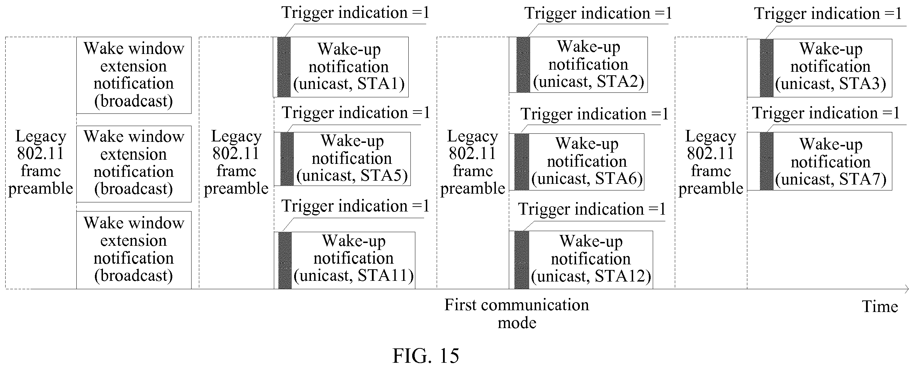

In an example, the wake-up device needs to wake up at least two to-be-woken-up devices on a subchannel, the wake-up device may asynchronously send a wake-up notification on the subchannel for a plurality of times, and the wake-up notification may be of a unicast form or a multicast form; and for a to-be-woken-up device into which a wake window is introduced, the wake-up notification may be further of a broadcast form. In an example, before sending the wake-up notification, the wake-up device may further send a wake window extension notification on the subchannel. In an example, as shown in FIG. 15, to-be-woken-up devices STA1, STA2, and STA3 are on a subchannel, to-be-woken-up devices STA5, STA6, and STA7 are on a subchannel, and to-be-woken-up devices STA11 and STA12 are on a subchannel. A wake-up device may first broadcast a wake window extension notification on each subchannel, to prolong a time length of a wake window of each of the foregoing to-be-woken-up devices, and then send unicast wake-up notifications in batches on three subchannels, to wake up corresponding to-be-woken-up devices.

In an example, for to-be-woken-up devices into which wake windows are introduced, the wake-up device may divide the to-be-woken-up devices into a plurality of device groups in which intra-group wake windows overlap and inter-group wake windows do not overlap. The wake-up device may wake to-be-woken-up devices in a same group in the manner recorded in the foregoing example, or may wake to-be-woken-up devices in different groups in an asynchronous sending manner. For a specific implementation, refer to the foregoing example. Details are not described herein again.

In the device wake-up method provided in this embodiment of this application, energy consumed by the to-be-woken-up device to decode the wake-up notification is relatively low; corresponding wake-up acknowledgment message sending modes may be used based on different situations indicated by the trigger indication carried in the wake-up notification; and the wake-up acknowledgment message may be further immediately sent after the trigger message is received, thereby reducing power consumption of the to-be-woken-up device in a process of being woken, improving efficiency of data transmission between devices, and reducing a transmission delay.

An embodiment of this application further provides another device wake-up method. The method is applied to a wake-up device and a to-be-woken-up device, the wake-up device includes a first interface and a second interface, the to-be-woken-up device includes a third interface and a fourth interface, the first interface communicates with the third interface in a first communication mode, and the second interface communicates with the fourth interface in a second communication mode. Steps of the method include: receiving, by the to-be-woken-up device, a wake-up notification from the first interface of the wake-up device through the third interface, where the wake-up notification is used to notify the to-be-woken-up device to wake up the fourth interface, the wake-up notification includes a trigger indication, and the trigger indication is used to indicate that the wake-up device is to send a trigger message to the to-be-woken-up device; and receiving, by the to-be-woken-up device, the trigger message from the second interface of the wake-up device through the fourth interface, where the trigger message is used to trigger the to-be-woken-up device to send a wake-up acknowledgment message to the second interface of the wake-up device through the fourth interface.

In an example, the first interface and the third interface are wake-up radio interfaces.

In an example, the second interface and the fourth interface are Wireless-Fidelity Wi-Fi interfaces.

In an example, the method further includes: sending, by the to-be-woken-up device, the wake-up acknowledgment message to the second interface of the wake-up device through the fourth interface.

In an example, the sending, by the to-be-woken-up device, the wake-up acknowledgment message to the second interface of the wake-up device through the fourth interface includes: sending, by the to-be-woken-up device, the wake-up acknowledgment message to the wake-up device in a multi-user communication mode.

In an example, the trigger message is further used to indicate a subchannel on which the to-be-woken-up device sends the wake-up acknowledgment message; and the sending, by the to-be-woken-up device, the wake-up acknowledgment message to the wake-up device in a multi-user communication mode includes: sending, by the to-be-woken-up device, the wake-up acknowledgment message through the subchannel.

In an example, the subchannel occupied by the wake-up acknowledgment message and a subchannel occupied by the wake-up notification have a preset mapping relationship.

In an example, the trigger indication includes a target sending time, and the target sending time is used to indicate a time at which the wake-up device sends the trigger message.

In an example, the method further includes: sending, by the to-be-woken-up device, a report message to the second interface of the wake-up device through the fourth interface, where the report message includes a wake-up preparation time, and the wake-up preparation time is used to indicate a period of time required for the fourth interface to enter a receiving state after the third interface receives the wake-up notification; and the wake-up preparation time is used by the wake-up device to determine the target sending time.

In an example, before the receiving, by the to-be-woken-up device, a wake-up notification from the first interface of the wake-up device through the third interface, the method further includes:

receiving, by the to-be-woken-up device, channel assignment information from the wake-up device through the fourth interface, to assign a subchannel on which the to-be-woken-up device receives the wake-up notification; and the receiving, by the to-be-woken-up device, a wake-up notification from the wake-up device through the third interface includes: receiving, by the to-be-woken-up device from the wake-up device through the subchannel, the wake-up notification sent in a multi-user communication mode.

In an example, before the receiving, by the to-be-woken-up device, a wake-up notification from the first interface of the wake-up device through the third interface, the method further includes: receiving, by the to-be-woken-up device, configuration information from the wake-up device through the fourth interface, where the configuration information is used to configure a multicast group, and the configured multicast group includes the to-be-woken-up device; and the receiving, by the to-be-woken-up device, a wake-up notification from the wake-up device through the third interface includes: receiving, by the to-be-woken-up device from the wake-up device, the wake-up notification sent in multicast mode.

In an example, the receiving, by the to-be-woken-up device, a wake-up notification from the first interface of the wake-up device through the third interface includes: receiving, by the to-be-woken-up device from the wake-up device, the wake-up notification sent in broadcast mode.

In an example, the wake-up notification includes a to-be-woken-up-device identifier, and the to-be-woken-up-device identifier is used to indicate that the wake-up device is to be woken up by the wake-up notification.

In an example, the trigger indication includes a destination address field; and when the destination address field includes at least one of a unicast address, a broadcast address, and a multicast address, the trigger indication is used to indicate that the wake-up device is to send the trigger message to the to-be-woken-up device.

In the device wake-up method provided in this embodiment of this application, energy consumed by the to-be-woken-up device to decode the wake-up notification is relatively low; corresponding wake-up acknowledgment message sending modes may be used based on different situations indicated by the trigger indication carried in the wake-up notification; and the wake-up acknowledgment message may be further immediately sent after the trigger message is received, thereby reducing power consumption of the to-be-woken-up device in a process of being woken, improving efficiency of data transmission between devices, and reducing a transmission delay.

An embodiment of this application further provides a wake-up device. The wake-up device is associated with at least one to-be-woken-up device, the wake-up device includes a first interface and a second interface, the to-be-woken-up device includes a third interface and a fourth interface, the first interface communicates with the third interface of the to-be-woken-up device in a first communication mode, and the second interface communicates with the fourth interface of the to-be-woken-up device in a second communication mode; the first interface is configured to send a wake-up notification to the third interface of the at least one to-be-woken-up device, where the wake-up notification is used to notify the to-be-woken-up device to wake up the fourth interface, the wake-up notification includes a trigger indication, and the trigger indication is used to indicate that the wake-up device is to send a trigger message to the at least one to-be-woken-up device; and the second interface is configured to send the trigger message to the fourth interface of the at least one to-be-woken-up device, where the trigger message is used to trigger the fourth interface of the at least one to-be-woken-up device to send a wake-up acknowledgment message to the first interface of the wake-up device.

For optional functions and beneficial effects of the first interface and the second interface of the wake-up device, refer to the description about the method in the foregoing content. Details are not described herein again.

An embodiment of this application further provides a to-be-woken-up device. The to-be-woken-up device is associated with at least one wake-up device, the wake-up device includes a first interface and a second interface, the to-be-woken-up device includes a third interface and a fourth interface, the first interface communicates with the third interface in a first communication mode, and the second interface communicates with the fourth interface in a second communication mode; the third interface is configured to receive a wake-up notification from the first interface of the wake-up device, where the wake-up notification is used to notify the at least one to-be-woken-up device to wake up the fourth interface, the wake-up notification includes a trigger indication, and the trigger indication is used to indicate that the wake-up device is to send a trigger message to the to-be-woken-up device; and the fourth interface is configured to rcccivc the trigger message from the second interface of the wake-up device, where the trigger message is used to trigger the to-be-woken-up device to send a wake-up acknowledgment message to the second interface of the wake-up device through the fourth interface.

For optional functions and beneficial effects of the third interface and the fourth interface of the to-be-woken-up device, refer to the description about the method in the foregoing content. Details are not described herein again.

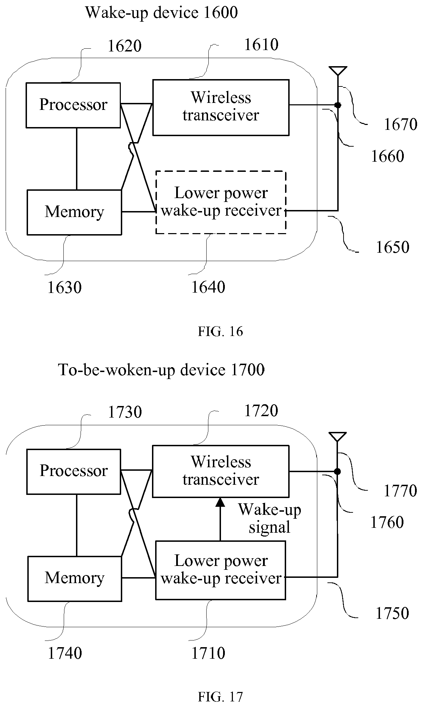

FIG. 16 is a schematic structural diagram of a wake-up device 1600 according to an embodiment of this application. As shown in FIG. 6, the wake-up device 1600 includes a wireless transceiver 1610, a processor 1620, a memory 1630, a second interface 1660 provided by the wireless transceiver 1610, and an antenna 1670.

The memory 1630 is configured to store a program, where the program includes code; and transmit the stored program code to the processor 1620. The processor 1620 may generate a wake-up notification based on the program code, where the wake-up notification is used to notify at least one to-be-woken-up device to wake up a fourth interface, the wake-up notification includes a trigger indication, and the trigger indication is used to indicate that the wake-up device 1600 is to send a trigger message to the at least one to-be-woken-up device. In this embodiment, the wireless transceiver 1610 may be configured to send the wake-up notification (the wake-up notification is a WUR signal, and may be usually sent through a first interface. In this embodiment, in this case, the first interface and the second interface may be a same physical entity having a plurality of signal receiving/transmission capabilities, that is, the second interface 1660 in this embodiment may separately implement receiving/transmission of a Wi-Fi signal and sending of the WUR signal. Alternatively, in this embodiment, both receiving/transmission of a Wi-Fi signal and sending of the WUR signal may be implemented by using the wireless transceiver 1610) to the at least one to-be-woken-up device through the second interface 1660 (for example, a Wi-Fi interface). The processor 1620 may further generate the trigger message based on the program code, where the trigger message is used to trigger the fourth interface of the at least one to-be-woken-up device to send a wake-up acknowledgment message to the second interface 1660. The wireless transceiver 1610 is configured to send the trigger message to the fourth interface of the at least one to-be-woken-up device through the second interface 1660.

In another embodiment, as shown in FIG. 16, the wake-up device 1600 may further include a lower power wake-up receiver 1640 and a first interface 1650 provided by the lower power wake-up receiver 1640, and the lower power wake-up receiver 1640 is configured to send the wake-up notification to the at least one to-be-woken-up device through the first interface 1650.

In an example, the first interface 1650 and the second interface 1660 may share the antenna 1670. This is mainly for purpose of reducing device costs. Alternatively, the first interface 1650 and the second interface 1660 may respectively use different antennas particularly when the two interfaces operate on different frequency bands such as a frequency band of 2.4 GHz and a frequency band of 5 GHz.

For other optional functions of the wireless transceiver 1610, the processor 1620, the memory 1630, the first interface 1650, the second interface 1660, the antenna 1670, and the lower power wake-up receiver 1640 of the wake-up device 1600, refer to the foregoing description about the method part. Details are not described herein again.

FIG. 17 is a schematic structural diagram of a to-be-woken-up device 1700 according to an embodiment of this application. As shown in FIG. 17, the to-be-woken-up device 1700 includes a lower power wake-up receiver 1710, a wireless transceiver 1720, a processor 1730, a memory 1740, a third interface 1750 provided by the lower power wake-up receiver 1710, a fourth interface 1760 provided by the wireless transceiver 1720, and an antenna 1770.

The lower power wake-up receiver 1710 is configured to receive a wake-up notification from a first interface of a wake-up device through the third interface 1750, where the wake-up notification includes a trigger indication, and the trigger indication is used to indicate that the wake-up device is to send a trigger message to the to-be-woken-up device. The processor 1730 is configured to wake up the fourth interface 1760 based on the wake-up notification, the waking up, by the processor 1730, the fourth interface 1760 based on the wake-up notification may specifically include: generating, by the processor 1730, a wake-up signal based on the wake-up notification, and the lower power wake-up receiver 1710 is further configured to send the wake-up signal to the wireless transceiver 1720 to wake up the wireless transceiver 1720, that is, wake up the fourth interface 1760; or the processor 1730 determines, based on the wake-up notification, that the wireless transceiver 1720 needs to be woken up, and under control of the processor 1730, the lower power wake-up receiver 1710 generates a wake-up signal and sends the wake-up signal to the wireless transceiver 1720 to wake up the wireless transceiver 1720. The wireless transceiver 1720 is configured to receive the trigger message from a second interface of the wake-up device through the fourth interface 1760, where the trigger message is used to trigger the to-be-woken-up device 1720 to send a wake-up acknowledgment message to the second interface of the wake-up device through the fourth interface. The memory 1740 is configured to store a program, where the program includes code; and transmit the stored program code to the processor 1730.

In an example, the third interface 1750 and the fourth interface 1760 may share the antenna 1770. This is mainly for purpose of reducing device costs. Alternatively, the third interface 1750 and the fourth interface 1760 may respectively use different antennas particularly when the two interfaces operate on different frequency bands such as a frequency band of 2.4 GHz and a frequency band of 5 GHz.

For other optional functions of the lower power wake-up receiver 1710, the wireless transceiver 1720, the processor 1730, the memory 1740, the third interface 1750, the fourth interface 1760, and the antenna 1770 of the wake-up device 1700, refer to the foregoing description about the method part. Details are not described herein again.

Some embodiments are further provided below. It should be noted that, in the following description, a first interface of a to-be-woken-up device may be equivalent to the foregoing third interface, and a second interface of the to-be-woken-up device may be equivalent to the foregoing fourth interface; a wake-up packet may be equivalent to the foregoing wake-up notification; and a first device is equivalent to the foregoing wake-up device, and a second device is equivalent to the foregoing to-be-woken-up device.

The IEEE 802.11 standard organization plans to formulate a Wi-Fi IoT standard based on a frequency band of 2.4 GHz/5 GHz, and the standard is basically characterized by lower power and a longer range. For the lower power, a possible method is to use a lower power (Lower Power, LP) wake-up radio (Wake-up Radio, WUR) on a Wi-Fi IoT device side. The wake-up radio is also referred to as a wake-up receiver (Wake-up Receiver, WUR). In the description of this application, the wake-up radio is uniformly used as a name.

The WUR means that an LP-WUR interface is introduced into a STA based on a conventional Wi-Fi interface (802.11 main radio, 802.11 main radio), as shown in FIG. 1. The 802.11 main radio is usually in a standby mode, and only when receiving a wake-up signal from the LP-WUP, the 802.11 main radio is activated, and then performs data communication with an AP. The LP-WUP of the STA is continuously in a receiving state or is intermittently in a receiving state. When receiving a wake-up packet (wake-up packet) from the AP, the LP-WUR in the receiving state sends a wake-up signal to the 802.11 main radio, to wake up the 802.11 main radio in a standby state. The AP side actually also includes an 802.11 main radio and a WUR module logically. However, for the current 802.11 standard, the 802.11 main radio is usually an OFDM wideband signal, and a WUR wake-up signal is a narrowband signal. For purpose of reducing costs and simplifying a structure, a narrowband WUR wake-up signal may be generated by using an OFDM wideband transmitter. For example, some subcarriers of an OFDM signal are vacant to and a signal is transmitted on only a narrowband corresponding to the WUR wake-up signal, thereby generating a narrowband signal. This is an example in which a WUR narrowband signal is generated by using an OFDM wideband transmitter. Therefore, the AP side in FIG. 1 includes only a module. It should be particularly noted that, in specific implementation, the 802.11 main radio and the WUR module may alternatively be separately implemented on the AP side. Additionally, each of the AP and the STA in FIG. 1 has only an antenna. This is mainly because the 802.11 main radio and the WUR module may share, when using a carrier on a same frequency band (for example, 2.4 GHz), a same antenna, to save costs and simplify a device structure. However, when the 802.11 main radio and the WUR module use carriers on different frequency bands, different antennas should be configured for the two. For example, the 802.11 main radio uses a frequency band of 5 GHz, and the WUR module uses a frequency band of 2.4 GHz. In this case, the two should correspond to different antennas.

A main reason why using the WUR by the STA can reduce power consumption compared with directly using the 802.11 main radio is that the wake-up packet is transmitted through a narrowband and receiving and decoding of the wake-up packet are greatly simpler than those of a conventional 802.11 frame. A modulation manner in which a receive end easily demodulates the wake-up packet, such as OOK (on-off key) modulation is usually used for the wake-up packet. Using the OOK modulation as an example, the receive end determines, depending on whether there is energy, information carried in a received signal. For example, if there is energy, the information is 1, or if there is no energy, the information is 0. The conventional 802.11 frame uses OFDM, BCC, or LDPC at a transmit end. Therefore, correspondingly, the receive end needs to perform complex signal processing operations such as FFT and FEC decoding, and these operations need to consume a large quantity of energy.

A document proposes a specific design of a wake-up packet, as shown in FIG. 3. An L-STF, an L-LTF, and an L-SIG are preamble (preamble) parts of the conventional 802.11, are sent on a bandwidth of 20 MHz (or integer times 20 MHz) in an OFDM manner, and are used for being backward compatible, so that a conventional Wi-Fi device may determine, based on this, that a current packet is a Wi-Fi packet, thereby selecting a corresponding channel to listen to a decision threshold. A payload part of the wake-up packet uses a modulation manner in which the payload part is demodulated easily, such as OOK modulation (which is specifically, for example, ASK), and may be transmitted on a more narrow bandwidth, for example, a channel of 2 MHz, a channel of 4 MHz, or a channel of 5 MHz (a minimum channel of conventional Wi-Fi is of 20 MHz), so that the receive end consumes less energy. The payload (Payload) of the wake-up packet includes a wake-up preamble and a MAC part, and the former is similar to an STF and an LTF in conventional Wi-Fi, and is used for synchronization, AGC, channel estimation, and the like; and the latter is similar to a MAC part of the conventional Wi-Fi frame, and further includes a MAC Header, a frame body (Frame Body), a frame check sequence (FCS), and simple channel coding may be performed on the MAC part in a manner such as by using a repetition code, a spreading code, or a Manchester code, to improve reliability. The wake-up preamble includes a string of particular sequences, and the WUR of the STA may not receive the front legacy preamble part, but directly detects the particular sequences, thereby identifying beginning of the wake-up packet. When receiving the wake-up packet and detecting an identifier (unicast/multicast/broadcast address) of the STA from the MAC part of the wake-up packet, the WUR of the STA sends the wake-up signal to the 802.11 main radio. In consideration of transmission efficiency, the legacy 802.11 preamble may be not added to the wake-up packet, and channel coding may be not used for the MAC part either. In addition to the OOK, the payload part may use another modulation manner in which the payload part is demodulated easily, for example, FSK.

If the WUR of the STA is in an active state for a long time, more power is consumed apparently. A compromised measure is to enable the WUR to be intermittently in the active state. Such wake window (Wake window) should occur regularly, so that the AP can learn when the WUR of the STA can receive the wake-up packet. For example, the WUR is in the active state for 2 ms of each 100 ms, as shown in FIG. 9. When the AP needs to send data to the STA, the wake-up packet may be sent in a wake window of the STA, thereby waking up the 802.11 main radio of the STA. Certainly, a wake window may be not introduced, that is, the WUR of the STA is always in a listening state, so that the AP may wake up the STA at any time, thereby facilitating reduction of a wake-up delay, but a disadvantage is an increase in energy consumption of the STA.

Regardless of whether a wake window is introduced, after the WUR of the STAreceives the wake-up packet from the associated AP and wakes up the 802.11 main radio of the STA, a wake-up acknowledgment message needs to be sent to the AP by using the 802.11 main radio, to indicate that the STA is woken up and the AP may send downlink data. An AP may be associated with many STAs. For example, in some sensor networks, an AP may be associated with thousands or tens of thousands of STAs. When the AP sends wake-up packets to WURs of a plurality of STAs to wake up the plurality of STAs, if the woken STAs respectively contend for channels based on the current Wi-Fi protocol and send wake-up acknowledgment messages, a quite long time is consumed, thereby greatly reducing system transmission efficiency.

A basic idea of this application is: A first device (that is, the wake-up device described in other parts in this specification, configured to wake up other devices) sends a wake-up packet to WUR interfaces of at least two second devices (that is, the to-be-woken-up devices described in the other parts in this specification) through a WUR interface, where the wake-up packet carries a trigger indication, to indicate whether the first device subsequently sends a trigger message on a main radio interface, and the trigger message is used to trigger the at least two second devices to send a wake-up acknowledgment message to the first device in an OFDMA manner.

If the trigger indication indicates that the trigger message is to be sent, after being woken, a main radio of the second device does not immediately contend to send the wake-up acknowledgment message, but waits for the trigger message sent by the first device. In this way, a plurality of second devices may simultaneously send wake-up acknowledgment messages in an OFDMA manner, thereby improving transmission efficiency of the wake-up acknowledgment messages.

If the trigger indication indicates that the trigger message is not sent, or the trigger indication indicates that the trigger message is to be sent, but after being woken, the main radio of the second device has not received the trigger message from the first device within a period of time, the second device still sends a wake-up acknowledgment message in a manner of contending for a channel.

The trigger message may be a trigger frame defined in 802.11 ax, and is used to trigger a plurality of second devices to perform transmission in an MU manner. The trigger indication (Trigger Indication) may be a bit. For example, 1 indicates that a trigger frame is to be sent, and 0 indicates that a trigger frame is not sent. The wake-up acknowledgment message may be a frame whose length is relatively short, such as PS-Poll (power saving-poll frame), NDP, Null Data (null data frame), or ACK, so as to reduce transmission overheads of the wake-up acknowledgment message. Description is performed in the following embodiment by using PS-Poll. As shown in FIG. 7, a bandwidth of a wideband preamble (wideband preamble) before PS-Poll may be 20 MHz, 40 MHz, or the like, that is, integer times 20 MHz. This is similar to a preamble part of a trigger-based PPDU format in current 802.11 ax.

The first device is a device sending a WUR wake-up packet, and the second device is a device receiving the WUR wake-up packet. For example, the first device may be an AP, and the second device may be a STA; or the first device may be a STA such as a mobile phone, and the second device may be a wearable device such as a smartphone or a band. In some scenarios, both of the two devices may have a WUR receiving/transmission capability, and then roles of the two devices depend on a current communication scenario. For example, both of a mobile phone and a band may have a WUR receiving/transmission capability, and both have a power saving requirement. Therefore, the mobile phone and the band may be simultaneously run in a WUR operating mode, but need to inform each other of a wake window law of each other. Specifically, when the mobile phone sends data to the band, the mobile phone sends a wake-up packet to the band in a wake window of the band. In this case, the mobile phone is the first device, and the band is the second device. When the band sends data to the mobile phone, the band sends a wake-up packet to the mobile phone in a wake window of the mobile phone. In this case, the band is the first device, and the mobile phone is the second device. For convenience of solution description, a subsequent part of this application is described by using an example in which the first device is an AP and the second device is a STA.

The first device may send wake-up packets to a plurality of second devices simultaneously or asynchronously; and may send a broadcast or multicast wake-up packet to a plurality of devices, may send a unicast wake-up packet to each second device, or sends broadcast or multicast wake-up packets to some devices and separately sends unicast wake-up packets to some other devices.

It should be noted that, the main radio interface and the WUR interface are logical concepts other than physical entities. For example, two interfaces of the AP and the STA may reuse a same antenna; and on an internal processing module, the STA separately has two receiving processing modules, namely, a WUR and a main radio, but the AP side has only a sending processing module. This is because the AP may be slightly modified based on an OFDM sending module of conventional Wi-Fi, thereby sending a WUR signal. For example, if a WUR is a single carrier signal, when performing OFDM subcarrier mapping, the AP may set other subcarriers to zero, and transmit a signal on only a subcarrier corresponding to the WUR, thereby generating a WUR signal. That is, the wake-up device AP may implement sending of the WUR signal and receiving/transmission of a Wi-Fi signal by using only a Wi-Fi main radio module, and may implement sending of the WUR signal without being equipped with an additional WUR transmitter.

Additionally, this patent is directed to a situation of "at least two second devices", but when there is only one second device, the first device may also add a trigger indication to a wake-up packet, to indicate whether the first device subsequently sends a trigger message on a main radio interface, and the trigger message is used to trigger the one second device to send a wake-up acknowledgment message to the first device. In this case, in addition to being a trigger frame, the trigger message may further be another frame such as a poll (Poll) frame, and the trigger message is a unicast frame. If this patent is directed to "at least two second devices", the trigger message is a broadcast frame.

Another function of sending, by the first device, the trigger message to the second device is synchronization, so that the second device begins to contend for a channel without waiting for an excessively long time, thereby reducing a data delay. Based on regulations in the current 802.11 standard, after being woken, a standby device can begin to contend for a channel only after the device hears an effective Wi-Fi frame that can be used to set an NAV (Network Allocation Vector, network allocation vector); otherwise, can begin to contend for a channel only after the device waits for a probe delay time length. A probe delay is a value related to device implementation, and is usually 5 ms to 10 ms. This greatly delays a time at which the second device sends the wake-up acknowledgment message, and then delays a data sending time. Sending of the trigger message may avoid this problem, so that the second device sends the wake-up acknowledgment message within a period of time as short as possible.

It should be particularly noted that, different specific indication forms may be used for the trigger indication in the wake-up packet.

In a specific embodiment, a trigger indication may be one or several bits in a wake-up packet. When a value of the trigger indication is a first value or any element in a first set, it indicates that the first device subsequently sends a trigger message on the main radio interface. Therefore, after being woken, the main radio of the second device does not need to contend for a channel to send a wake-up acknowledgment message, and needs to only wait for the trigger message from the first device. When a value of the trigger indication is a second value or any element in a second set, it indicates that the first device subsequently does not send a trigger message on the main radio interface. Therefore, after being woken, the main radio of the second device needs to send a wake-up acknowledgment message in a contention manner. The first value and the second value are different, and an intersection set of the first set and the second set is a null set. For example, the trigger indication is 1 bit. When a value of the trigger indication is the first value 1, it indicates that the trigger message is to be sent, and when a value of the trigger indication is the second value 2, it indicates that the trigger message is not sent. For another example, the trigger indication is 3 bits. When a value of the trigger indication is any element value in the first set {0, 1, 2}, it indicates that the trigger message is to be sent, and when a value of the trigger indication is any element value in the second set {3, 4, 5, 6, 7}, it indicates that the trigger message is not sent.

The standard may further specify that, when the first device needs to wake up at least two second devices, the first device inevitably collects wake-up acknowledgment messages from a plurality of second devices by sending trigger messages, and when the first device wakes up only one second device, the second device sends a wake-up acknowledgment message in a contention manner. Therefore, in another specific embodiment, a trigger indication may be an address field in a wake-up packet. For example, when a destination address field in a wake-up packet sent by the first device includes a broadcast address or multicast address, it indicates that the first device subsequently sends a trigger message on the main radio interface. Therefore, after being woken, the main radio of the second device does not need to contend for a channel to send a wake-up acknowledgment message, and needs to only wait for the trigger message from the first device. When a destination address field in a wake-up packet sent by the first device includes a unicast address, it indicates that the first device subsequently does not send a trigger message on the main radio interface. Therefore, after being woken, the main radio of the second device needs to send a wake-up acknowledgment message in a contention manner. For a situation in which the destination address field includes a broadcast address or multicast address, the wake-up packet may further include identifier information of second devices, to indicate that those second devices are expected to be woken up. For example, a wake-up packet may include a list of a plurality of device identifiers, to indicate a plurality of second devices that are expected to be woken up. For another example, a wake-up packet may further include a start identifier (start ID) and a bitmap (Bitmap), and bits in the bitmap correspond to different target wake-up devices. A first bit corresponds to a target wake-up device indicated by the start identifier, and a value of each bit in the bitmap indicates whether a corresponding device is a target wake-up device. For example, in a wake-up packet, a start identifier is 7 and a bitmap is [10011011], to indicate that identifiers of target wake-up devices of the current wake-up packet are respectively 7, 10, 11, 13, and 14.

English acronyms used in this specification and corresponding English full names and Chinese translations are as follows:
ACK Acknowledge acknowledgment
AP Access Point access point
ASK Amplitude Shift Keying amplitude shift keying
BCC Binary Convolutional Code binary convolutional code FCSFrame Check Sequence frame check sequence
FEC Forward Error Correction forward error correction
FFTFast Fourier Transform Fast Fourier Transform
FSK Frequency Shift Keying frequency shift keying
ID Identifier identifier
IEEE Institute of Electrical and Electronics Engineers Institute of Electrical and Electronics Engineers
IoT Internet of Things Internet of Things
L- Legacy legacy
LDPC Low-density Parity Check low-density parity check
LP Lower Power lower power
LTF Long Training Field long training field
MAC Medium Access Control Media Access Control
NDP Null Data Packet null data packet
OFDM Orthogonal Frequency Division Multiplexing orthogonal frequency division multiplexing
OFDMA Orthogonal Frequency Division Multiple Access orthogonal frequency division multiple access
OOK On-Off Key on-off keying
PS Power Saving power saving
SIG Signal signal field
STA Station station
STF Short Training Field short training field
TSF Timing Synchronization Function timing synchronization function
WE Window Extension window extension
Wi-Fi Wireless-Fidelity Wireless-Fidelity
WUR Wake-up Receiver wake-up receiver

### 1. Trigger indication: used to indicate a target sending time of a trigger message

The first device may further indicate, in the trigger indication in the wake-up packet, a target sending time at which the first device sends the trigger message on the main radio. Because before sending the trigger message, the first device also needs to contend for a channel, an exact trigger message sending time cannot be indicated. Therefore, the target sending time means that the first device does not send the trigger message before a time point indicated by the target sending time, and a specific sending moment needs to be determined based on a result of contending for a channel by the first device. In this way, before the time point indicated by the target sending time, the main radio of the second device does not need to listen on a channel, thereby saving more power. This is because a period of time is required from when a device receives a wake-up packet until the main radio enters an operating state, and the period of time may be at a level of ms. If the main radio is always in a receiving and detection state, more power is consumed.

A specific indication manner is to use a value to indicate that a trigger message is not sent, and to use other values to indicate target sending times. For example, the trigger indication is indicated by using 8 bits, 0 indicates that a trigger message is not sent, and other values indicate different target sending times. Another specific indication manner is that, the standard specifies that sending of a trigger message is necessary. In this case, all values of the trigger indicated by are used to indicate target sending times of the trigger message.

Another specific indication manner is that, the trigger indication includes a destination address field and a target sending time field, that is, the two respectively occupy independent fields. When the destination address field indicates that a trigger message is to be sent, the target sending time field indicates a target sending time of the trigger message. When the destination address field indicates that a trigger message is not sent, the target sending time field reserves or is used to indicate other information.

A specific target sending time may be an absolute time or a relative time:
1. absolute time: several low bytes of a TSF corresponding to a moment at which a trigger message is expected to be sent, where the TSF is a system clock; and
2. relative time: a time interval between a moment at which a current wake-up packet ends and a moment at which a trigger message is expected to be sent. FIG. 5 and FIG. 6 are described below by using the relative time as an example.

FIG. 5 and FIG. 6 respectively describes setting of a target sending time (relative time) in two situations in which wake-up packets are sent asynchronously and sent in an OFDMA manner. When wake-up packets sent to different STAs are asynchronously sent, target sending times carried in a plurality of wake-up packets point to a same moment, but different sending times of the wake-up packets cause different time start points. Therefore, specific values of the target sending times are different. When a plurality of wake-up packets are sent in an OFDMA manner, because start points are the same, specific values of target sending times are the same.

Another reason why the trigger indication carries the target sending time of the trigger message is that, the first device may not send wake-up packets to a plurality of second devices simultaneously (for example, asynchronously send wake-up packets one by one), or because periods of time required from when different second devices receive wake-up packets from the WUR until the main radio enters the receiving state are different, main radios of different second devices need to wait for different time lengths, causing unnecessary power consumption. To enable the first device to accurately set the target sending time of the trigger message, each second device may in advance report, to the first device by using the main radio, a (longest) period of time required from when the second device receives a wake-up packet from the WUR until the main radio enters the receiving state, that is, the wake-up preparation time. When the first device sets the target sending time of the trigger message, the setting should be performed by using a second device getting ready latest as a reference.

### 2. Transmission of a wake-up acknowledgment message

Wake-up acknowledgment messages sent by a plurality of second devices are transmitted to the first device in an OFDMA manner and based on a trigger message sent by the first device, and a subchannel used when each second device sends a wake-up acknowledgment message may be determined in any one of the following manners:
1. Optional manner 1: The first device explicitly indicates, in a trigger message, a subchannel used when each second device sends a wake-up acknowledgment message. This is a most flexible solution, and is also a preferred solution. In this case, the trigger message may reuse a trigger frame in 802.11 ax. The first device may further schedule and transmit data of another device together with a wake-up acknowledgment message of a to-be-woken-up device, as shown in FIG. 8.
2. Optional manner 2: A subchannel on which the second device sends a wake-up acknowledgment message and a subchannel on which a wake-up packet is received are the same, or have a particular mapping relationship. This solution is applicable to only a situation in which the first device sends a wake-up packet in an OFDMA manner and a same subchannel wakes up only a second device, and has an advantage that resource allocation information does not need to be indicated in a trigger message and indication overheads are fewer. That a subchannel on which a wake-up acknowledgment message is sent and a subchannel on which a wake-up packet is received have a particular mapping relationship includes two situations:
   Situation A. A width of a subchannel on which a wake-up packet is received and a width of a subchannel on which a wake-up acknowledgment message is sent are the same, but specific subchannel locations are different. For example, there are nine subchannels in total, two subchannels are cyclically offset based on a subchannel on which a wake-up packet is received, a serial number of the subchannel on which a wake-up packet is received is n (n=0 to 8), and then a corresponding subchannel on which a wake-up acknowledgment message is sent is (n+2) mod 9.
   Situation B. A width of a subchannel on which a wake-up packet is received and a width of a subchannel on which a wake-up acknowledgment message is sent are different. To ensure that the wake-up packet has a relatively high rate so that a time domain length of the wake-up packet is shorter, a bandwidth occupied by the wake-up packet may be relatively wide, for example, 4 MMz, and the subchannel of the wake-up acknowledgment message is relatively narrow, for example, 2 MHz. In this case, a mapping relationship may be established between two channels. For example, 20 MHz includes five wake-up packet subchannels, and each subchannel corresponds to one subchannel of 10 wake-up acknowledgment message subchannels included in a channel of 20 MHz.
3. Optional manner 3: The second device sends a wake-up acknowledgment message by performing random access, that is, the second device randomly selects a subchannel from subchannels indicated by a trigger message to send a wake-up acknowledgment message. In this case, the trigger message is a random access trigger frame. Because the trigger message does not indicate resource allocation of each second device, indication overheads are fewer. A disadvantage is that a plurality of second devices may select a same subchannel, thereby causing collision, so that transmission of the wake-up acknowledgment message fails.

### 3. Multi-device wake-up

The solution of this application is mainly applied to a situation in which the first device wakes up a plurality of second devices. If the first device wakes up only one second device, there is only one wake-up acknowledgment message correspondingly. If this solution is used, introduction of a trigger message may reduce transmission efficiency on the contrary. A specific multi-device wake-up solution may be any one of the following solutions:
1. Wake-up solution 1: The first device sends a wake-up packet in an OFDMA manner.
   The first device in advance sends a notification message by using a main radio, and configures a receiving subchannel (subchannel) for a WUR of each second device. Different subchannels are configured for WURs of at least two groups of second devices, each group of second devices includes at least one second device, and wake windows of the at least two groups of second devices partially or completely overlap in time domain. In this way, the first device may simultaneously send wake-up packets to the at least two groups of second devices in the wake windows of the at least two groups of second devices.
   As shown in FIG. 10 and FIG. 11, the AP configures the subchannel 1 for the STA1 and the STA2 to serve as a WUR wake-up subchannel, configures the subchannel 2 for the STA3 to serve as a WUR wake-up subchannel, and configures the subchannel 3 for the STA4, the STA5, and the STA6 to serve as a WUR wake-up subchannel. When the AP needs to wake up the STA1, the STA3, and the STA6, the AP may simultaneously send wake-up packets to the STA1, the STA3, and the STA6 respectively on the subchannel 1, the subchannel 2, and the subchannel 3 in an OFDMA manner.
   This solution can effectively improve wake-up packet sending efficiency.
2. Wake-up solution 2: The first device sends a broadcast/multicast wake-up packet that may carry identifier information of a second device.
   The first device may send a broadcast wake-up packet on a subchannel, to wake up all second devices that are associated with the first device and that are currently located in a wake window. For a multicast wake-up packet, it is required that the first device needs to establish a multicast group in advance, to determine a plurality of second devices corresponding to a multicast address. The multicast wake-up packet is used to wake up all devices that are in the group of second devices and that are currently located in a wake window.
   If not all devices need to be woken up, the first device may further include, in a broadcast/multicast wake-up packet, identifier information of a second device that needs to be woken up, for example, a start ID (start ID) and a bitmap (bitmap). The start ID indicates an ID of a second device corresponding to a first bit in the bitmap, each bit of the bitmap may be 0 or 1, 0 indicates that a second device corresponding to a current bit is not woken, and 1 indicates that a device corresponding to a current bit is woken up.
3. Wake-up solution 3: The first device sends a wake window extension packet, to delay a WUR of a second device from being standby, so as to send unicast wake-up packets one by one.
   The first device sends a broadcast/multicast window extension packet (Window Extension packet, WE packet), and the second device prolongs a time of a wake window of the WUR based on this, so that the first device has a sufficient time to send wake-up packets one by one, as shown in FIG. 12. The window extension packet may further include a time length by which the wake window needs to be prolonged.
4. Wake-up solution 4: Wake windows of second devices are divided into groups in time domain.
   The first device divides second devices into a plurality of groups, wake windows of each group of second devices are aligned, and wake windows of different groups of second devices do not overlap in time domain. The first device may send a broadcast wake-up packet, to wake up a group of second devices; or wake second devices in a group one by one by using a unicast wake-up packet. Because IDs of different groups of second devices may be reused, an ID length is shorter, thereby reducing a length of a wake-up packet. A specific example is shown in FIG. 13.
5. Wake-up solution 5: The foregoing four solutions are mixed in use.

### A. Solution 1 + Solution 2

The first device sends wake-up packets to a plurality of groups of second devices in parallel on a plurality of subchannels in an OFDMA manner, and each group of second devices include one or more second devices. Correspondingly, the wake-up packet may be a unicast, multicast, or broadcast packet. As shown in FIG. 14, (M, STA1&2) indicates a multicast (Multicast) packet, and a current multicast group includes two devices, namely, a STA1 and a STA2; (U, STA3) indicates a unicast (Unicast) packet, and a receiving object is a STA3; and (B, STA4&5&6) indicates a broadcast (Broadcast) packet, and only a STA4, a STA5, and a STA6 are in a wake-up state on a current subchannel. In this way, an AP may send three wake-up packets in parallel, to wake up six STAs, and wake-up efficiency is further improved.

### B. Solution 1 + Solution 3

In a situation of Solution 1, if more than one STA needs to be woken up on a single subchannel, an AP may first send a broadcast window extension (Window Extension, WE) packet on the corresponding subchannel in an OFDMA manner, and then continuously send a plurality of wake-up (Wake-up, WU) packets in an OFDMA manner, thereby waking up a plurality of STAs. The wake-up packet may be a unicast, multicast, or broadcast packet. In this way, this is an example in which Solution 1, Solution 2, and Solution 3 are mixed in use, as shown in FIG. 15. It should be noted that, an interaction process of a trigger frame and PS-Poll on a Wi-Fi interface is not shown in FIG. 15.

### C. Solution 4 is combined with another solution.

For Solution 4, STAs are divided into a plurality of STA groups in which intra-group wake windows are aligned and inter-group wake windows do not overlap. For each group of STAs, all of Solution 1, Solution 2, Solution 3, and the foregoing two solutions A and B may be used, and details are not described again.

### D. Solution 2 and Solution 3

For Solution 2, after a wake window is extended, a wake-up packet sent by an AP may be a unicast, multicast, or broadcast packet.

An embodiment of this application provides a wake-up device for sending a trigger message, as described in the sixth part in the summary. A specific structure of the wake-up device may be a structure of an AP shown in FIG. 16. A module 1600 corresponds to the wake-up device. The wake-up device 1600 includes sub-modules 1601, 1602, 1603, 104, and 1605. The sub-module 1602 corresponds to a first generation unit, configured to generate a wake-up packet; the sub-module 1601 corresponds to a second generation unit, configured to generate a trigger message; the sub-module 1604 corresponds to a first interface, configured to send the wake-up packet to a to-be-woken-up device; and the sub-module 1603 corresponds to a second interface, configured to send the trigger message based on a trigger indication, and receive a wake-up acknowledgment message sent by at least two to-be-woken-up devices to the wake-up device in an OFDMA manner. In FIG. 16, a first interface 1604 and a second interface 1603 correspond to the same sub-module 1605 (for example, an antenna). For main purpose of reducing device costs and simplifying implementation, when using a carrier on a same frequency band (for example, a frequency band of 2.4 GHz) to perform transmission, the first interface 1604 and the second interface 1603 may reuse a same antenna. Actually, the first interface 1604 and the second interface 1603 may alternatively correspond to different antennas. Particularly when the two use carriers on different frequency bands, the first interface 1604 and the second interface 1603 need to use different antennas. For example, if the first interface 1604 uses a frequency band of 5 GHz, and the second interface 1603 uses a frequency band of 2.4 GHz, an antenna needs to be configured for each of the two interfaces. Additionally, the second generation unit 1601 and the first generation unit 1602 may be a same sub-module, as shown in the structure of the AP in FIG. 1. This is for purpose of simplifying a device structure and reducing costs. For example, the second generation unit 1601 generates a wideband OFDM signal, and the first generation unit 1602 generates a narrowband signal. Therefore, some subcarriers of the OFDM signal may be vacant and a signal is transmitted on only a narrowband corresponding to the first generation unit 1602, thereby generating the narrowband signal. This is an example in which the narrowband signal of the first generation unit 1602 is generated by using a wideband OFDM transmitter of the second generation unit 1601. That is, a signal of the second generation unit 1601 may be generated by using the first generation unit 1602. It should be particularly noted that, the second generation unit 1601 and the first generation unit 1602 are only logical modules. In a specific device, the second generation unit 1601 and the first generation unit 1602 may be implemented by using a same processor, or implemented by using a same integrated circuit module.

An embodiment of this application provides a to-be-woken-up device, as described in the seventh part in the summary. A specific structure of the to-be-woken-up device may be a structure of a STA shown in FIG. 17. A module 1700 corresponds to the to-be-woken-up device. The wake-up device 1700 includes sub-modules 1701, 1702, 1703, 1704, and 1705. The sub-module 1702 corresponds to a wake-up unit, configured to send, when receiving, through a first interface, a wake-up packet sent by a wake-up device, a wake-up signal to a second interface, to wake up the second interface; the sub-module 1701 corresponds to a generation unit, configured to generate a wake-up acknowledgment message; the sub-module 1704 corresponds to the first interface, configured to receive the wake-up packet sent by the wake-up device; and the sub-module 1703 corresponds to the second interface, configured to receive a trigger message sent by the wake-up device, and send, after receiving the trigger message, the wake-up acknowledgment message to the wake-up device. In FIG. 17, a first interface 1704 and a second interface 1703 correspond to the same antenna sub-module 1705. For main purpose of reducing device costs and simplifying implementation, when using a carrier on a same frequency band (for example, a frequency band of 2.4 GHz) to perform transmission, the first interface 1704 and the second interface 1703 may reuse a same antenna. Actually, the first interface 1704 and the second interface 1703 may alternatively correspond to different antennas. Particularly when the two use carriers on different frequency bands, the first interface 1704 and the second interface 1703 need to use different antennas. For example, if the first interface 1704 uses a frequency band of 5 GHz, and the second interface 1703 uses a frequency band of 2.4 GHz, an antenna needs to be configured for each of the two interfaces. It should be particularly noted that, the generation unit 1701 and the wake-up unit 1702 are only logical modules. In a specific device, the generation unit 1701 and the wake-up unit 1702 may be implemented by using a same processor, or implemented by using a same integrated circuit module.

Beneficial effects brought by the embodiments of this application may include one or more of the following:
1. A wake-up packet carries a trigger indication, and a process in which a plurality of STAs send wake-up acknowledgment messages is more efficient.
2. A wake-up packet carries a target sending time of a trigger frame, and a main radio of a STA may not listen on a channel before this time, thereby saving more power.
3. Sending of a trigger frame enables a device to begin, after being woken, to contend for a channel without waiting for an excessively long time, so that a wake-up acknowledgment message can be sent as soon as possible, thereby reducing a delay of subsequent data transmission.

An interface described in the embodiments of this application may be a logical concept (for example, a logical function unit), or may be a physical entity (for example, a communications interface provided by a corresponding communications module). Each of functions implemented by various related interfaces (for example, the first to the fourth interfaces, the WUR interface, and the Wi-Fi interface) is implemented by using a corresponding physical entity such as a wireless transceiver, a lower power wake-up receiver, or a lower power wake-up transmitter. Therefore, each of steps that are performed by the second interface or the fourth interface and that are described in the embodiments of this application may be alternatively performed by a wireless transceiver (for example, a Wi-Fi communications module that is alternatively referred to as a Wi-Fi main radio); each of steps that are performed by the first interface of the first device and that are described in the embodiments of this application may be alternatively performed by a lower power wake-up transmitter of the first device (in another embodiment, because a wireless transceiver may have two functions, namely, receiving/transmission of a Wi-Fi signal and sending of a WUR signal, the steps performed by the first interface of the first device may be alternatively performed by a wireless transceiver of the first device); and each of steps that are performed by the third interface of the second device and that are described in the embodiments of this application may be alternatively performed by a lower power wake-up receiver of the second device. If both a receiving function and a sending function of a WUR signal are integrated in a WUR module, the WUR module may be referred to as a lower power wake-up transceiver, and the foregoing lower power wake-up transmitter or lower power wake-up receiver may be replaced with a lower power wake-up transceiver.

Cross reference may be performed between related parts between the method embodiments of the present invention; and apparatuses provided in the apparatus embodiments are configured to perform methods provided in corresponding method embodiments. Therefore, the apparatus embodiments may be understood with reference to related parts in the related method embodiments. Cross reference may be performed between related parts between the embodiments of the present invention. A structural diagram of an apparatus provided in each apparatus embodiment of the present invention shows only a simplified design of the corresponding apparatus. In actual application, the apparatus may include any quantity of transmitters, receivers, transceivers, processors, memories, or the like, to implement a function or an operation performed by the apparatus in the apparatus embodiments of the present invention, and all apparatuses that can implement this application fall within the protection scope of this application. A name of a message/frame/indication information, a module, a unit, or the like provided in the embodiments of the present invention is only an example, and another name may be used, provided that the message/frame/indication information, the module, the unit, or the like has a same function.

It may be understood that, the processor in the embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any conventional processor.

The method steps in the embodiments of this application may be implemented in a hardware manner or may be implemented in a manner of executing a software instruction by a processor. The software instruction may include a corresponding software module. The software module may reside in a random access memory (Random Access Memory, RAM), a flash memory, a read-only memory (Read-Only Memory, ROM), a programmable read-only memory (Programmable ROM, PROM), an erasable programmable read-only memory (Erasable Programmable ROM, EPROM), an electrically erasable programmable read-only memory (Electrically EPROM, EEPROM), a register, a hard disk, a removable hard disk, a CD-ROM, or a storage medium in any other form well-known in the art. A storage medium used as an example is coupled to the processor, so that the processor can read information from the storage medium, and can write information into the storage medium. Certainly, the storage medium may be a part of the processor. The processor and the storage medium may be located in an ASIC.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk, (SSD)), or the like.

It may be understood that numerical symbols involved in the embodiments of this application are differentiated merely for ease of description, but are not used to limit the scope of the embodiments of this application. It may be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

## Claims

1. A wake-up device (1600), wherein the wake-up device (1600) is associated with at least two to-be-woken-up devices (1700), the wake-up device (1600) comprises a first interface (1650) and a second interface (1660), each to-be-woken-up device (1700) among the two to-be-woken-up devices (1700) comprises a third interface (1750) and a fourth interface (1760), the first interface (1650) communicates with the third interface (1750) of each to-be-woken-up device (1700) among the at least two to-be-woken-up devices (1700) in a first communication mode, and the second interface (1660) communicates with the fourth interface (1760) of each to-be-woken-up device (1700) among the at least two to-be-woken-up devices (1700) in a second communication mode, wherein:
• the first interface (1650) is configured to send a wake-up notification to the third interface (1750) of each to-be-woken-up device (1700) among the at least two to-be-woken-up devices (1700), wherein the wake-up notification is used to notify each to-be-woken-up device (1700) among the at least two to-be-woken-up devices (1700) to wake up the fourth interface (1760), the wake-up notification comprises a trigger indication, and the trigger indication is used to indicate that the wake-up device (1600) is to send a trigger message to each to-be-woken-up device (1700) among the at least two to-be-woken-up devices (1700);
• the second interface (1660) is configured to send the trigger message to the fourth interface (1760) of each to-be-woken-up device (1700) among the at least two to-be-woken-up devices (1700), wherein the trigger message is used to trigger the fourth interface (1760) of each to-be-woken-up device (1700) among the at least two to-be-woken-up devices (1700) to send a wake-up acknowledgment message to the second interface (1660) of the wake-up device (1600);
**characterized in that**
• the second interface (1660) is further configured to receive the wake-up acknowledgment message from the fourth interface (1760) of each to-be-woken-up device (1700) among the at least two to-be-woken-up devices (1700) in a multi-user communication mode,
wherein the trigger message is further used to indicate a subchannel on which each of the at least two to-be-woken-up device (1700) sends the wake-up acknowledgment message, and the second interface (1660) is further configured to receive, through the subchannel corresponding to each to-be-woken-up device (1700), the wake-up acknowledgment message sent by the corresponding to-be-woken-up device (1700).

2. The wake-up device (1600) according to claim 1, wherein the first interface (1650) and the third interface (1750) are wake-up radio interfaces.

3. The wake-up device (1600) according to claim 1 or 2, wherein the second interface (1660) and the fourth interface (1760) are Wireless-Fidelity Wi-Fi interfaces.

4. The wake-up device (1600) according to any one of claims 1 to 3, wherein the trigger indication comprises a target sending time, and the target sending time is used to indicate a time at which the wake-up device sends the trigger message.

5. The wake-up device (1600) according to claim 4, wherein the second interface (1660) is further configured to receive a report message from the fourth interface (1760) of each to-be-woken-up device (1700) among the at least two to-be-woken-up devices (1700), wherein the report message comprises a wake-up preparation time, and the wake-up preparation time is used to indicate a period of time required for the fourth interface (1760) to enter a receiving state after the third interface (1750) receives the wake-up notification; and
the wake-up device (1600) determines the target sending time based on the wake-up preparation time.

6. The wake-up device (1600) according to any one of claims 1 to 5, wherein the second interface (1660) is further configured to send channel assignment information to each to-be-woken-up device (1700) among the at least two to-be-woken-up devices (1700), to assign a subchannel on which the to-be-woken-up device (1700) receives the wake-up notification; and
the first interface (1650) is further configured to send the wake-up notification to each to-be-woken-up devices (1700) among the at least two to-be-woken-up devices (1700) on the subchannel in the multi-user communication mode.

7. The wake-up device (1600) according to any one of claims 1 to 6, wherein the at least two to-be-woken-up devices (1700) comprise at least two to-be-woken-up device groups;
the second interface (1660) is further configured to send channel assignment information to the at least two to-be-woken-up device groups, to assign a subchannel on which the at least two to-be-woken-up device groups receive the wake-up notification; and
the first interface (1650) is further configured to send the wake-up notification to the at least two to-be-woken-up device (1700) groups on the subchannel in the multi-user communication mode.

8. The wake-up device (1600) according to any one of claims 1 to 5, wherein the at least two to-be-woken-up devices (1700) comprise at least two to-be-woken-up device groups;
the first interface (1650) is further configured to send configuration information to one or more of the at least two to-be-woken-up device groups, to configure the one or more device groups as one or more multicast groups;
the second interface (1660) is further configured to send channel assignment information to the one or more multicast groups, to assign a subchannel on which the one or more multicast groups receive the wake-up notification; and
the first interface (1650) is further configured to send the wake-up notification to the one or more multicast groups in the multi-user communication mode, wherein the wake-up notification comprises one or more multicast wake-up notifications, and the one or more multicast wake-up notifications are used to wake up a to-be-woken-up device (1700) in the one or more multicast groups.

9. The wake-up device (1600) according to any one of claims 1 to 8, wherein the trigger indication comprises a destination address field; and
when the destination address field comprises a broadcast address or multicast address, the trigger indication is used to indicate that the wake-up device (1600) is to send the trigger message.

10. A to-be-woken-up device (1700), wherein the to-be-woken-up device (1700) is associated with at least one wake-up device (1600), the wake-up device (1600) comprises a first interface (1650) and a second interface (1660), the to-be-woken-up device (1700) comprises a third interface (1750) and a fourth interface (1760), the first interface (1650) communicates with the third interface (1750) in a first communication mode, and the second interface (1660) communicates with the fourth interface (1760) in a second communication mode, wherein:
• the third interface (1750) is configured to receive a wake-up notification from the first interface (1650) of the wake-up device (1600), wherein the wake-up notification is used to notify the to-be-woken-up device (1700) to wake up the fourth interface (1760), the wake-up notification comprises a trigger indication, and the trigger indication is used to indicate that the wake-up device (1600) is to send a trigger message to the to-be-woken-up device (1700); and
• the fourth interface (1760) is configured to receive, after being woken, the trigger message from the second interface (1660) of the wake-up device (1600), wherein the trigger message is used to trigger the to-be-woken-up device (1700) to send a wake-up acknowledgment message to the second interface (1660) of the wake-up device (1600) through the fourth interface (1760),
**characterized in that**
• wherein the fourth interface (1760) is further configured to send the wake-up acknowledgment message to the second interface (1660) of the wake-up device (1600) in a multi-user communication mode,
wherein the trigger message is used to indicate a subchannel on which the to-be-woken-up device (1700) sends the wake-up acknowledgment message, and
wherein the fourth interface (1760) is further configured to send the wake-up acknowledgment message through the subchannel.

11. The to-be-woken-up device (1700) according to claim 10, wherein the first interface (1650) and the third interface (1750) are wake-up radio interfaces, wherein the second interface (1660) and the fourth interface (1760) are Wireless-Fidelity Wi-Fi interfaces.

12. The to-be-woken-up device (1700) according to any one of claims 10 to 11, wherein the fourth interface (1760) is further configured to send the wake-up acknowledgment message to the second interface (1660) of the wake-up device (1600).

## Patentansprüche

1. Aufweckvorrichtung (1600), wobei die Aufweckvorrichtung (1600) mindestens zwei aufzuweckenden Vorrichtungen (1700) zugeordnet ist, wobei die Aufweckvorrichtung (1600) eine erste Schnittstelle (1650) und eine zweite Schnittstelle (1660) umfasst, wobei jede aufzuweckende Vorrichtung (1700) der zwei aufzuweckenden Vorrichtung (1700) eine dritte Schnittstelle (1750) und eine vierte Schnittstelle (1760) umfasst, wobei in einem ersten Kommunikationsmodus die erste Schnittstelle (1650) mit der dritten Schnittstelle (1750) jeder aufzuweckenden Vorrichtung (1700) der mindestens zwei aufzuweckenden Vorrichtungen (1700) kommuniziert und in einem zweiten Kommunikationsmodus die zweite Schnittstelle (1660) mit der vierten Schnittstelle (1760) jeder aufzuweckenden Vorrichtung (1700) der mindestens zwei aufzuweckenden Vorrichtungen (1700) kommuniziert, wobei:
• die erste Schnittstelle (1650) dazu konfiguriert ist, eine Aufweckmeldung an die dritte Schnittstelle (1750) jeder aufzuweckenden Vorrichtung (1700) der mindestens zwei aufzuweckenden Vorrichtungen (1700) zu senden, wobei die Aufweckmeldung verwendet wird, um jede aufzuweckende Vorrichtung (1700) der mindestens zwei aufzuweckenden Vorrichtungen (1700) darüber zu informieren, die vierte Schnittstelle (1760) aufzuwecken, die Aufweckmeldung eine Auslöseangabe umfasst und die Auslöseangabe verwendet wird, um anzugeben, dass die Aufweckvorrichtung (1600) eine Auslösenachricht an jede aufzuweckende Vorrichtung (1700) der mindestens zwei aufzuweckenden Vorrichtungen (1700) senden wird;
• die zweite Schnittstelle (1660) dazu konfiguriert ist, die Auslösenachricht an die vierte Schnittstelle (1760) jeder aufzuweckenden Vorrichtung (1700) der mindestens zwei aufzuweckenden Vorrichtungen (1700) zu senden, wobei die Auslösenachricht verwendet wird, um auszulösen, dass die vierte Schnittstelle (1760) jeder aufzuweckenden Vorrichtung (1700) der mindestens zwei aufzuweckenden Vorrichtungen (1700) eine Aufweckbestätigungsnachricht an die zweite Schnittstelle (1660) der Aufweckvorrichtung (1600) sendet;
**dadurch gekennzeichnet, dass**
• die zweite Schnittstelle (1660) ferner dazu konfiguriert ist, die Aufweckbestätigungsnachricht von der vierten Schnittstelle (1760) jeder aufzuweckenden Vorrichtung (1700) der mindestens zwei aufzuweckenden Vorrichtungen (1700) in einem Kommunikationsmodus für mehrere Benutzer zu empfangen,
wobei die Auslösenachricht ferner verwendet wird, um einen Unterkanal anzugeben, über den jede der mindestens zwei aufzuweckenden Vorrichtungen (1700) die Aufweckbestätigungsnachricht sendet, und die zweite Schnittstelle (1660) ferner dazu konfiguriert ist, über den Unterkanal, welcher der jeweiligen aufzuweckenden Vorrichtung (1700) entspricht, die Aufweckbestätigungsnachricht zu empfangen, die von der entsprechenden aufzuweckenden Vorrichtung (1700) gesendet wird.

2. Aufweckvorrichtung (1600) nach Anspruch 1, wobei es sich bei der ersten Schnittstelle (1650) und der dritten Schnittstelle (1750) um Aufweckfunkschnittstellen handelt.

3. Aufweckvorrichtung (1600) nach Anspruch 1 oder 2, wobei es sich bei der zweiten Schnittstelle (1660) und der vierten Schnittstelle (1760) um Wireless-Fidelity-Schnittstellen (Wi-Fi-Schnittstellen) handelt.

4. Aufweckvorrichtung (1600) nach einem der Ansprüche 1 bis 3, wobei die Auslöseangabe einen Zielsendezeitpunkt umfasst und der Zielsendezeitpunkt verwendet wird, um einen Zeitpunkt anzugeben, an dem die Aufweckvorrichtung die Auslösenachricht sendet.

5. Aufweckvorrichtung (1600) nach Anspruch 4, wobei die zweite Schnittstelle (1660) ferner dazu konfiguriert ist, eine Meldenachricht von der vierten Schnittstelle (1760) jeder aufzuweckenden Vorrichtung (1700) der mindestens zwei aufzuweckenden Vorrichtungen (1700) zu empfangen, wobei die Meldenachricht eine Aufweckvorbereitungszeit umfasst und die Aufweckvorbereitungszeit verwendet wird, um eine Zeitdauer anzugeben, welche die vierte Schnittstelle (1760) benötigt, um in einen Empfangszustand zu wechseln, nachdem die dritte Schnittstelle (1750) die Aufweckmeldung empfangen hat; und
die Aufweckvorrichtung (1600) den Zielsendezeitpunkt auf Grundlage der Aufweckvorbereitungszeit bestimmt.

6. Aufweckvorrichtung (1600) nach einem der Ansprüche 1 bis 5, wobei die zweite Schnittstelle (1660) ferner dazu konfiguriert ist, Kanalzuweisungsinformationen an jede aufzuweckende Vorrichtung (1700) der mindestens zwei aufzuweckenden Vorrichtungen (1700) zu senden, um einen Unterkanal zuzuweisen, über den die aufzuweckende Vorrichtung (1700) die Aufweckmeldung empfängt; und
die erste Schnittstelle (1650) ferner dazu konfiguriert ist, die Aufweckmeldung in dem Kommunikationsmodus für mehrere Benutzer über den Unterkanal an jede aufzuweckende Vorrichtung (1700) der mindestens zwei aufzuweckenden Vorrichtungen (1700) zu senden.

7. Aufweckvorrichtung (1600) nach einem der Ansprüche 1 bis 6, wobei die mindestens zwei aufzuweckenden Vorrichtungen (1700) mindestens zwei Gruppen aufzuweckender Vorrichtungen umfassen; die zweite Schnittstelle (1660) ferner dazu konfiguriert ist, Kanalzuweisungsinformationen an die mindestens zwei Gruppen aufzuweckender Vorrichtungen zu senden, um einen Unterkanal zuzuweisen, über den die mindestens zwei Gruppen aufzuweckender Vorrichtungen die Aufweckmeldung empfangen; und
die erste Schnittstelle (1650) ferner dazu konfiguriert ist, die Aufweckmeldung in dem Kommunikationsmodus für mehrere Benutzer über den Unterkanal an die mindestens zwei Gruppen aufzuweckender Vorrichtungen (1700) zu senden.

8. Aufweckvorrichtung (1600) nach einem der Ansprüche 1 bis 5, wobei die mindestens zwei aufzuweckenden Vorrichtungen (1700) mindestens zwei Gruppen aufzuweckender Vorrichtungen umfassen; die erste Schnittstelle (1650) ferner dazu konfiguriert, Konfigurationsinformationen an eine oder mehrere der mindestens zwei Gruppen aufzuweckender Vorrichtungen zu senden, um die eine oder die mehreren Vorrichtungsgruppen als eine oder mehrere Multicast-Gruppen zu konfigurieren;
die zweite Schnittstelle (1660) ferner dazu konfiguriert ist, Kanalzuweisungsinformationen an die eine oder die mehreren Multicast-Gruppen zu senden, um einen Unterkanal zuzuweisen, über den die eine oder die mehreren Multicast-Gruppen die Aufweckmeldung empfangen; und
die erste Schnittstelle (1650) ferner dazu konfiguriert ist, die Aufweckmeldung in dem Kommunikationsmodus für mehrere Benutzer an die eine oder die mehreren Multicast-Gruppen zu senden, wobei die Aufweckmeldung eine oder mehrere Multicast-Aufweckmeldungen umfasst und die eine oder die mehreren Multicast-Aufweckmeldungen verwendet werden, um eine aufzuweckende Vorrichtung (1700) in der einen oder den mehreren Multicast-Gruppen aufzuwecken.

9. Aufweckvorrichtung (1600) nach einem der Ansprüche 1 bis 8, wobei die Auslöseangabe ein Empfängeradressfeld umfasst; und die Auslöseangabe verwendet wird, um anzugeben, dass die Aufweckvorrichtung (1600) die Auslösenachricht senden wird, , wenn das Empfängeradressfeld eine Broadcast-Adresse oder Multicast-Adresse umfasst.

10. Aufzuweckende Vorrichtung (1700), wobei die aufzuweckende Vorrichtung (1700) mindestens einer Aufweckvorrichtung (1600) zugeordnet ist, wobei die Aufweckvorrichtung (1600) eine erste Schnittstelle (1650) und eine zweite Schnittstelle (1660) umfasst, wobei die aufzuweckende Vorrichtung (1700) eine dritte Schnittstelle (1750) und eine vierte Schnittstelle (1760) umfasst, wobei in einem ersten Kommunikationsmodus die erste Schnittstelle (1650) mit der dritten Schnittstelle (1750) kommuniziert und in einem zweiten Kommunikationsmodus die zweite Schnittstelle (1660) mit der vierten Schnittstelle (1760) kommuniziert, wobei:
• die dritte Schnittstelle (1750) dazu konfiguriert ist, eine Aufweckmeldung von der ersten Schnittstelle (1650) der Aufweckvorrichtung (1600) zu empfangen, wobei die Aufweckmeldung verwendet wird, um die aufzuweckende Vorrichtung (1700) darüber zu informieren, die vierte Schnittstelle (1760) aufzuwecken, die Aufweckmeldung eine Auslöseangabe umfasst und die Auslöseangabe verwendet wird, um anzugeben, dass die Aufweckvorrichtung (1600) eine Auslösenachricht an die aufzuweckende Vorrichtung (1700) senden wird; und
• die vierte Schnittstelle (1760) dazu konfiguriert ist, nachdem sie aufgeweckt wurde, die Auslösenachricht von der zweiten Schnittstelle (1660) der Aufweckvorrichtung (1600) zu empfangen, wobei die Auslösenachricht verwendet wird, um auszulösen, dass die aufzuweckende Vorrichtung (1700) über die vierte Schnittstelle (1760) eine Aufweckbestätigungsnachricht an die zweite Schnittstelle (1660) der Aufweckvorrichtung (1600) sendet,
**dadurch gekennzeichnet, dass**
• die vierte Schnittstelle (1760) ferner dazu konfiguriert ist, die Aufweckbestätigungsnachricht in einem Kommunikationsmodus für mehrere Benutzer an die zweite Schnittstelle (1660) der Aufweckvorrichtung (1600) zu senden, wobei die Auslösenachricht verwendet wird, um einen Unterkanal anzugeben, über den die aufzuweckende Vorrichtung (1700) die Aufweckbestätigungsnachricht sendet, und
wobei die vierte Schnittstelle (1760) ferner dazu konfiguriert ist, die Aufweckbestätigungsnachricht über den Unterkanal zu senden.

11. Aufzuweckende Vorrichtung (1700) nach Anspruch 10, wobei es sich bei der ersten Schnittstelle (1650) und der dritten Schnittstelle (1750) um Aufweckfunkschnittstellen handelt, wobei es sich bei der zweiten Schnittstelle (1660) und der vierten Schnittstelle (1760) um Wireless-Fidelity-Schnittstellen (Wi-Fi-Schnittstellen) handelt.

12. Aufzuweckende Vorrichtung (1700) nach einem der Ansprüche 10 bis 11, wobei die vierte Schnittstelle (1760) ferner dazu konfiguriert ist, die Aufweckbestätigungsnachricht an die zweite Schnittstelle (1660) der Aufweckvorrichtung (1600) zu senden.

## Revendications

1. Dispositif de réveil (1600), dans lequel le dispositif de réveil (1600) est associé à au moins deux dispositifs à réveiller (1700), le dispositif de réveil (1600) comprend une première interface (1650) et une deuxième interface (1660), chaque dispositif à réveiller (1700) parmi les deux dispositifs à réveiller (1700) comprend une troisième interface (1750) et une quatrième interface (1760), la première interface (1650) communique avec la troisième interface (1750) de chaque dispositif à réveiller (1700) parmi les au moins deux dispositifs à réveiller (1700) dans un premier mode de communication, et la deuxième interface (1660) communique avec la quatrième interface (1760) de chaque dispositif à réveiller (1700) parmi les au moins deux dispositifs à réveiller (1700) dans un second mode de communication, dans lequel :
• la première interface (1650) est configurée pour envoyer une notification de réveil à la troisième interface (1750) de chaque dispositif à réveiller (1700) parmi les au moins deux dispositifs à réveiller (1700), dans lequel la notification de réveil est utilisée pour notifier à chaque dispositif à réveiller (1700) parmi les au moins deux dispositifs à réveiller (1700) de réveiller la quatrième interface (1760), la notification de réveil comprend une indication de déclenchement, et l'indication de déclenchement est utilisée pour indiquer que le dispositif de réveil (1600) doit envoyer un message de déclenchement à chaque dispositif à réveiller (1700) parmi les au moins deux dispositifs à réveiller (1700) ;
• la deuxième interface (1660) est configurée pour envoyer le message de déclenchement à la quatrième interface (1760) de chaque dispositif à réveiller (1700) parmi les au moins deux dispositifs à réveiller (1700), dans lequel le message de déclenchement est utilisé pour déclencher la quatrième interface (1760) de chaque dispositif à réveiller (1700) parmi les au moins deux dispositifs à réveiller (1700) pour envoyer un message d'accusé de réception de réveil à la deuxième interface (1660) du dispositif de réveil (1600) ;
**caractérisé en ce que**
• la deuxième interface (1660) est en outre configurée pour recevoir le message d'accusé de réception de réveil en provenance de la quatrième interface (1760) de chaque dispositif à réveiller (1700) parmi les au moins deux dispositifs à réveiller (1700) dans un mode de communication multi-utilisateur,
dans lequel le message de déclenchement est en outre utilisé pour indiquer un sous-canal sur lequel chacun des au moins deux dispositifs à réveiller (1700) envoie le message d'accusé de réception de réveil, et la deuxième interface (1660) est en outre configurée pour recevoir, par l'intermédiaire du sous-canal correspondant à chaque dispositif à réveiller (1700), le message d'accusé de réception de réveil envoyé par le dispositif à réveiller (1700) correspondant.

2. Dispositif de réveil (1600) selon la revendication 1, dans lequel la première interface (1650) et la troisième interface (1750) sont des interfaces radio de réveil.

3. Dispositif de réveil (1600) selon la revendication 1 ou 2, dans lequel la deuxième interface (1660) et la quatrième interface (1760) sont des interfaces Wi-Fi Wireless-Fidelity.

4. Dispositif de réveil (1600) selon l'une quelconque des revendications 1 à 3, dans lequel l'indication de déclenchement comprend un temps d'envoi cible, et le temps d'envoi cible est utilisé pour indiquer un temps auquel le dispositif de réveil envoie le message de déclenchement.

5. Dispositif de réveil (1600) selon la revendication 4, dans lequel la deuxième interface (1660) est en outre configurée pour recevoir un message de rapport en provenance de la quatrième interface (1760) de chaque dispositif à réveiller (1700) parmi les au moins deux dispositifs à réveiller (1700), dans lequel le message de rapport comprend un temps de préparation de réveil, et le temps de préparation du réveil est utilisé pour indiquer une période de temps requise pour que la quatrième interface (1760) entre dans un état de réception après que la troisième interface (1750) a reçu la notification de réveil ; et
le dispositif de réveil (1600) détermine le temps d'envoi cible sur la base du temps de préparation de réveil.

6. Dispositif de réveil (1600) selon l'une quelconque des revendications 1 à 5, dans lequel la deuxième interface (1660) est en outre configurée pour envoyer une information d'assignation de canal à chaque dispositif à réveiller (1700) parmi les au moins deux dispositifs à réveiller (1700), pour assigner un sous-canal sur lequel le dispositif à réveiller (1700) reçoit la notification de réveil ; et
la première interface (1650) est en outre configurée pour envoyer la notification de réveil à chaque dispositif à réveiller (1700) parmi les au moins deux dispositifs à réveiller (1700) sur le sous-canal dans le mode de communication multi-utilisateur.

7. Dispositif de réveil (1600) selon l'une quelconque des revendications 1 à 6, dans lequel les au moins deux dispositifs à réveiller (1700) comprennent au moins deux groupes de dispositifs à réveiller ;
la deuxième interface (1660) est en outre configurée pour envoyer une information d'assignation de canal aux au moins deux groupes de dispositifs à réveiller, pour assigner un sous-canal sur lequel les au moins deux groupes de dispositifs à réveiller reçoivent la notification de réveil ; et
la première interface (1650) est en outre configurée pour envoyer la notification de réveil aux au moins deux groupes de dispositifs à réveiller (1700) sur le sous-canal dans le mode de communication multi-utilisateur.

8. Dispositif de réveil (1600) selon l'une quelconque des revendications 1 à 5, dans lequel les au moins deux dispositifs à réveiller (1700) comprennent au moins deux groupes de dispositifs à réveiller ;
la première interface (1650) est en outre configurée pour envoyer une information de configuration à un ou plusieurs des au moins deux groupes de dispositifs à réveiller, pour configurer les un ou plusieurs groupes de dispositifs comme un ou plusieurs groupes de multidiffusion ;
la deuxième interface (1660) est en outre configurée pour envoyer une information d'assignation de canal aux ou plusieurs groupes de multidiffusion, pour assigner un sous-canal sur lequel les un ou plusieurs groupes de multidiffusion reçoivent la notification de réveil ; et
la première interface (1650) est en outre configurée pour envoyer la notification de réveil aux un ou plusieurs groupes de multidiffusion dans le mode de communication multi-utilisateur, dans lequel la notification de réveil comprend une ou plusieurs notifications de réveil de multidiffusion, et les une ou plusieurs notifications de réveil de multidiffusion sont utilisées pour réveiller un dispositif à réveiller (1700) dans les un ou plusieurs groupes de multidiffusion.

9. Dispositif de réveil (1600) selon l'une quelconque des revendications 1 à 8, dans lequel l'indication de déclenchement comprend un champ d'adresse de destination ; et lorsque le champ d'adresse de destination comprend une adresse de diffusion ou une adresse de multidiffusion, l'indication de déclenchement est utilisée pour indiquer que le dispositif de réveil (1600) doit envoyer le message de déclenchement.

10. Dispositif à réveiller (1700), dans lequel le dispositif à réveiller (1700) est associé à au moins un dispositif de réveil (1600), le dispositif de réveil (1600) comprend une première interface (1650) et une deuxième interface (1660), le dispositif à réveiller (1700) comprend une troisième interface (1750) et une quatrième interface (1760), la première interface (1650) communique avec la troisième interface (1750) dans un premier mode de communication, et la deuxième interface (1660) communique avec la quatrième interface (1760) dans un second mode de communication, dans lequel :
• la troisième interface (1750) est configurée pour recevoir une notification de réveil en provenance de la première interface (1650) du dispositif de réveil (1600), dans lequel la notification de réveil est utilisée pour notifier au dispositif à réveiller (1700) de réveiller la quatrième interface (1760), la notification de réveil comprend une indication de déclenchement, et l'indication de déclenchement est utilisée pour indiquer que le dispositif de réveil (1600) doit envoyer un message de déclenchement au dispositif à réveiller (1700) ; et
• la quatrième interface (1760) est configurée pour recevoir, après avoir été réveillée, le message de déclenchement en provenance de la deuxième interface (1660) du dispositif de réveil (1600), dans lequel le message de déclenchement est utilisé pour déclencher le dispositif à réveiller (1700) pour envoyer un message d'accusé de réception de réveil à la deuxième interface (1660) du dispositif de réveil (1600) par l'intermédiaire de la quatrième interface (1760),
**caractérisé en ce que**
• dans lequel la quatrième interface (1760) est en outre configurée pour envoyer le message d'accusé de réception de réveil à la deuxième interface (1660) du dispositif de réveil (1600) dans un mode de communication multi-utilisateur,
dans lequel le message de déclenchement est utilisé pour indiquer un sous-canal sur lequel le dispositif à réveiller (1700) envoie le message d'accusé de réception de réveil, et dans lequel la quatrième interface (1760) est en outre configurée pour envoyer le message d'accusé de réception de réveil par l'intermédiaire du sous-canal.

11. Dispositif à réveiller (1700) selon la revendication 10, dans lequel la première interface (1650) et la troisième interface (1750) sont des interfaces radio de réveil, dans lequel la deuxième interface (1660) et la quatrième interface (1760) sont des interfaces Wi-Fi Wireless-Fidelity.

12. Dispositif à réveiller (1700) selon l'une quelconque des revendications 10 à 11, dans lequel la quatrième interface (1760) est en outre configurée pour envoyer le message d'accusé de réception de réveil à la deuxième interface (1660) du dispositif de réveil (1600).
